# EUROPEAN PATENT APPLICATION

(11) **EP 4 661 381 A1**
(43) Date of publication of application: **10.12.2025**
(21) Application number: 24777462.3
(22) Date of filing: 18.01.2024
(51) Int. Cl.: H04M 1/725

(54) **CONFIGURATION METHOD AND ELECTRONIC DEVICE**

(30) Priority: 29.03.2023 CN 202310335773
(71) Applicant: Huawei Technologies Co., Ltd., Shenzhen, Guangdong 518129 (CN)
(72) Inventor: WU, Li, Shenzhen, Guangdong 518129 (CN); HUANG, Qiang, Shenzhen, Guangdong 518129 (CN); ZHANG, Kai, Shenzhen, Guangdong 518129 (CN)
(74) Representative: Gill Jennings & Every LLP
(86) International application number: PCT/CN2024/073113
(87) International publication number: WO 2024/198667

(57) **Abstract**

This application provides a configuration method and an electronic device, and relates to the field of terminal technologies. In this application, scenario configuration of a device can be automatically completed by using a near field communication technology. This simplifies a user operation and improves user experience. The method includes: A first device determines, based on obtained information of a second device, that the second device approaches or is in contact with the first device. In response to approach or contact of the second device, the first device obtains a first scenario corresponding to a first operation performed by a user on a scenario configuration interface of the first device, where the first scenario is associated with behavior of controlling at least one third device. Then, the first device associates the first scenario with the second device.

## Description

This application claims priority to Chinese Patent Application No. 202310335773.4, filed with the China National Intellectual Property Administration on March 29, 2023 and entitled "CONFIGURATION METHOD AND ELECTRONIC DEVICE", which is incorporated herein by reference in its entirety.

### TECHNICAL FIELD

Embodiments of this application relate to the field of terminal technologies, and in particular, to a configuration method and an electronic device.

### BACKGROUND

With development of terminal technologies, smart switches are gradually used in scenarios such as a smart home because of advantages such as rich functions and features, use safety, and low power consumption.

However, before using the smart switch, a user needs to perform device registration and scenario configuration. In this process, the user needs to separately perform an operation on a mobile phone application and the smart switch, and needs to have specific basic knowledge of smart home configuration. As a result, it is difficult for the user to perform an operation, and user experience is affected.

### SUMMARY

To resolve the foregoing technical problem, this application provides a configuration method and an electronic device. According to the technical solution provided in this application, scenario configuration of a device is automatically completed by using a near field communication technology. This simplifies a user operation and improves user experience.

To achieve the foregoing technical objective, this application provides the following technical solutions.

According to a first aspect, a configuration method is provided, applied to a first device. The method includes: determining, based on obtained information of a second device, that the second device approaches or is in contact with the first device; in response to approach or contact of the second device, obtaining a first scenario corresponding to a first operation performed by a user on a scenario configuration interface of the first device, where the first scenario is associated with behavior of controlling at least one third device; and associating the first scenario with the second device.

The first operation may be an operation performed by the user on the scenario configuration interface, or may be a series of operations performed by the user on the scenario configuration interface.

In this way, by using a near field communication technology, the user can complete scenario configuration of the second device through a simple operation. Compared with the conventional technology in which the user needs to poke a reset hole on the second device with a pin to complete scenario configuration of the second device, in the configuration method provided in this application, scenario configuration of the second device can be automatically completed through interaction between the first device and the second device. This effectively simplifies a user operation, reduces user operation difficulty, reduces user learning costs, and improves user experience.

According to the first aspect, after the first scenario is associated with the second device, the method further includes: in response to approach or contact of the second device again, displaying related information of the first scenario associated with the second device.

In this way, in response to a simple operation, the user may read, by using the first device, the related information of the configured scenario of the second device, to determine whether the scenario of the second device needs to be reconfigured. This effectively simplifies user operation difficulty.

According to the first aspect or any implementation of the first aspect, the related information of the first scenario includes one or more of a device name of the second device, a scenario name of the first scenario, a trigger condition of the first scenario, a name of first space, a scenario identifier of the first scenario, an icon of the second device, and a remaining battery level of the second device.

In this way, the first device may display a plurality of types of information about the configured scenario of the second device, so that the user learns of the configured scenario of the second device.

According to the first aspect or any implementation of the first aspect, when the second device includes a plurality of buttons, and the first scenario is a configured scenario of a target button in the plurality of buttons, in response to the approach or the contact of the second device again, the method further includes: displaying details about a configured scenario of a button other than the target button in the plurality of buttons.

In this way, the user can learn of scenario configuration statuses of the plurality of buttons of the second device through a simple operation. This reduces user operation difficulty and improves user experience.

According to the first aspect or any implementation of the first aspect, the method further includes: in response to a user operation, editing the first scenario; and associating the edited first scenario with the second device.

In this way, in a process of reading the configured scenario of the second device, the user may also edit the configured scenario of the second device, so that the edited scenario better meets a use requirement of the user. In addition, the user does not need to trigger, by using another operation, re-writing of the scenario of the second device, but can directly trigger editing of the configured scenario. This simplifies a user operation.

According to the first aspect or any implementation of the first aspect, associating the first scenario with the second device includes: locally storing or sending, to a server, a device identifier of the second device and device control information corresponding to the device identifier of the second device; or locally storing or sending, to a server, a device identifier of the second device and a scenario identifier of the first scenario associated with the second device.

For example, the first device sends, to the server, the device identifier of the second device and the device control information corresponding to the device identifier of the second device. In this way, the server can associate the received device identifier with the device control information. Subsequently, after receiving an operation code sent by the second device, the server can determine the device identifier of the second device that sends the operation code, and further determine the device control information corresponding to the device identifier, to trigger a corresponding operation event. For example, the second device determines, in response to a tap signal (for example, an operation code corresponding to the tap operation) sent by the second device, that a corresponding triggered operation event is turning on the light, and the second device may send an operation indication to the light, to trigger the light to be turned on.

For another example, the first device locally stores the device identifier of the second device and the device control information corresponding to the device identifier of the second device. In this way, the first device can directly associate the device identifier with the device control information. Subsequently, after receiving a control signal sent by the second device, the first device can determine the device identifier of the second device that sends the control signal, and further determine the device control information corresponding to the device identifier, to trigger a corresponding operation event.

For another example, scenario information of a plurality of scenarios is pre-configured in the server. In this case, the first device sends, to the server, the device identifier of the second device and the scenario identifier of the first scenario associated with the second device. In this way, after receiving the device identifier and the scenario identifier that are sent by the first device, the server can determine scenario information of the corresponding first scenario based on the scenario identifier, and further associate the device identifier with the corresponding first scenario, to subsequently trigger the corresponding scenario.

For another example, scenario information of a plurality of scenarios is pre-configured in the first device. In this case, the first device can directly determine scenario information of the corresponding first scenario based on the scenario identifier, and further associate the device identifier with the corresponding first scenario, to subsequently trigger the corresponding scenario.

In this way, a communication system may include a plurality of combinations and interaction manners between different devices, to meet a requirement for flexible combination of the communication system. In addition, in different combinations and interaction, a scenario configuration requirement of the second device can be implemented, to meet use of the user.

According to the first aspect or any implementation of the first aspect, associating the first scenario with the second device includes: sending, to the second device, the device identifier of the second device and the device control information corresponding to the device identifier of the second device.

For example, after completing registration for the second device, the first device may determine the device identifier of the second device. In this case, after determining the device control information, the first device may send the device identifier and the device control information to the second device. Subsequently, after detecting a user operation, the second device may directly determine, based on the device control information, an operation code and/or an operation event corresponding to the user operation, and further send the operation code and/or the operation event to the server, to trigger control of a corresponding third device.

In this way, the device control information is directly configured for the second device, and in response to the user operation, the second device can trigger control of the third device.

According to the first aspect or any implementation of the first aspect, the device control information includes operation code information and/or an operation event.

According to the first aspect or any implementation of the first aspect, the operation code information includes at least one operation code, and the at least one operation code indicates one or more of a button type, a button index, and a button operation type of a button of the second device.

The button type includes, for example, a single button and a plurality of buttons. The button index indicates a specific button configured in the second device, for example, a button 1, a button 2, or a button 3. The button operation type includes, for example, tap, double-tap, and touch and hold.

According to the first aspect or any implementation of the first aspect, when the first device locally stores the device identifier of the second device and the device control information corresponding to the device identifier of the second device, or when the first device locally stores the device identifier of the second device and the scenario identifier of the first scenario associated with the second device, the method further includes: receiving a first operation code sent by the second device; determining a first operation event corresponding to the first operation code; and sending operation indication information to at least one target third device, indicated by the first operation event, in the at least one third device.

In some examples, the second device may further receive a second operation code sent by the second device, and determine a second operation event corresponding to the second operation code. Then, the first device sends second operation indication information to at least one target third device (which is the same as or different from the third device indicated by the first operation code), indicated by the second operation event, in the at least one third device.

In other words, one or more buttons may be configured for the second device, and one or more button operation types may be configured for a single button. In this way, in response to user operations, the second device may trigger sending of different operation codes to the first device, so that the second device flexibly controls a same third device or different third devices in different scenarios. This improves user experience.

According to the first aspect or any implementation of the first aspect, before the device identifier of the second device is locally stored or sent to the server, the method further includes: determining, based on the obtained information of the second device, whether the second device is registered; and when the second device is not registered, registering with the server as a proxy for the second device based on the information of the second device; or when the second device is not registered, sending, to a fourth device, the information that is of the second device and that is used to complete registration for the second device.

According to the first aspect or any implementation of the first aspect, registering with the server as the proxy for the second device based on the information of the second device includes: obtaining a device identifier sent by the server, where the device identifier indicates the second device; and sending the device identifier to the second device.

Optionally, after determining that the registration for the second device is completed, the first device triggers a scenario configuration procedure of the second device.

In this way, in response to the obtained information of the second device, the first device can automatically trigger the registration procedure of the second device. This effectively reduces user operation difficulty.

According to the first aspect or any implementation of the first aspect, obtaining the first scenario corresponding to the first operation performed by the user on the scenario configuration interface of the first device includes: displaying the scenario configuration interface, where the scenario configuration interface is used to display a scenario card; and determining, in response to the first operation performed by the user on the scenario configuration interface, the first scenario that is selected by the user and that corresponds to a first scenario card.

Optionally, the scenario card may alternatively be described as a scenario component, a scenario control, or the like. This is not limited in this application.

Optionally, a scenario configuration component is displayed on a first interface, the first interface is used to configure a device in first space, and a scenario corresponding to the first scenario card is a scenario that can be configured for the second device in the first space. In this way, different scenarios can be configured for the second device in different space. This enriches use of the user.

In this way, the scenario is pre-configured, and the user can complete scenario configuration of the second device through a simple selection operation. This effectively reduces scenario configuration difficulty.

According to the first aspect or any implementation of the first aspect, before the first scenario that is selected by the user and that corresponds to the first scenario card is determined in response to the first operation performed by the user on the scenario configuration interface, the method further includes: in response to a second operation performed by the user on the scenario configuration interface, editing the first scenario corresponding to the first scenario card.

In this way, in a scenario configuration process, in response to the user operation, the first device may edit the scenario, so that the edited scenario better meets a use requirement of the user.

According to the first aspect or any implementation of the first aspect, associating the first scenario with the second device includes: displaying a scenario writing animation effect, where the scenario writing animation effect includes an animation effect that is presented on a display interface of the first device and in which a scenario display component corresponding to the first scenario is sucked into a placement area of the second device on the display interface.

In this way, the scenario writing animation effect is displayed, so that interest of the user in waiting for scenario writing is increased, and this helps the user learn of the scenario that is being written.

According to the first aspect or any implementation of the first aspect, displaying the scenario configuration interface includes: in response to an operation performed by the user on a scenario configuration component, displaying the scenario configuration interface; or in response to the approach or the contact of the second device, displaying the scenario configuration interface. In other words, the user may show, by selecting the control on the display interface of the first device, an intent that the scenario configuration interface needs to be opened, to configure the scenario of the second device. Alternatively, the first device may determine, based on the approach or the contact of the second device, that the user has an intent of configuring the scenario of the second device, and then automatically pop up the scenario configuration interface. Optionally, when the second device approaches or is in contact with the first device, the first device may further obtain a scenario writing status of the second device locally or from the second device or another device, and pop up different association interfaces based on different scenario writing statuses. For example, when it is determined that a scenario is written into the second device, a scenario details interface is popped up. When it is determined that no scenario is written into the second device, the scenario configuration interface is popped up.

In this way, the user may trigger scenario writing of the second device in a plurality of manners. This effectively improves user experience.

According to the first aspect or any implementation of the first aspect, after the scenario configuration interface is displayed, the method further includes: in response to an operation performed by the user on a second scenario card in the scenario card, displaying scenario information of a second scenario corresponding to the second scenario card.

In this way, in the scenario configuration process, in response to the user operation, the first device may display details about the scenario, so that the user learns of an application status of the scenario, to determine whether the scenario needs to be selected.

According to the first aspect or any implementation of the first aspect, the scenario configuration component (for example, a control) is displayed on the first interface, the first interface is used to configure the device in the first space, and the scenario corresponding to the first scenario card is the scenario that can be configured for the second device in the first space.

In this way, different scenarios can be configured for the second device in different space. This enriches use of the user.

According to the first aspect or any implementation of the first aspect, a number is displayed on the first scenario card, the number indicates a ranking in which the user selects the scenario card, and the ranking matches a scenario writing ranking in which the first scenario is associated with the second device.

In this way, sequential scenario selection and scenario writing are implemented.

According to the first aspect or any implementation of the first aspect, a quantity of first scenario cards is less than or equal to a first threshold.

In this way, a case in which a large quantity of scenarios are configured for the second device, and user operation difficulty is increased is avoided.

According to the first aspect or any implementation of the first aspect, associating the first scenario with the second device includes: determining, based on the information of the second device, that the second device includes a plurality of buttons; displaying a second interface, where the second interface is used to display prompt information, and the prompt information indicates the user to select a target button of a to-be-configured scenario from the plurality of buttons; in response to a third operation performed by the user on the second interface, determining the target button; and associating the first scenario with the target button in the second device.

For example, the first device detects an NFC "tap to connect" operation, obtains NFC tag information of the second device, and determines, based on device information in the NFC tag information, that the second device includes three buttons. In this case, the first device may display a button selection interface. After detecting, on the button selection interface, a button selected by the user, the first device may display the scenario configuration interface, receive an operation of selecting a to-be-configured scenario by the user, and write, into the determined button of the second device, the to-be-configured scenario selected by the user.

In this way, when the second device includes the plurality of buttons, in response to user operations, the first device may also separately configure scenarios of different buttons, so that the user can control the third device in a plurality of scenarios by using one second device.

According to the first aspect or any implementation of the first aspect, the method further includes: in response to the approach or the contact of the second device, determining whether a scenario is configured for the second device; and when a scenario is configured for the second device, displaying a device read interface, where the device read interface is used to display detailed information of the scenario configured for the second device; or when a scenario is not configured for the second device, displaying the scenario configuration interface, to perform scenario configuration of the second device.

In this way, in response to a same operation of the user, the first device may flexibly meet a use requirement of the user based on a scenario configuration status of the second device.

According to the first aspect or any implementation of the first aspect, associating the first scenario with the second device includes: obtaining first identity information of the user; and associating the first scenario, the second device, and the first identity information based on the information of the second device.

In this way, different users may trigger different scenarios of the second device by using the same second device. This further improves user experience.

According to the first aspect or any implementation of the first aspect, it may be specifically determined, based on the information that is of the second device and that is obtained through any one of near field communication NFC, Bluetooth, or wireless fidelity Wi-Fi, that the second device approaches or is in contact with the first device.

According to a second aspect, an electronic device is provided. The electronic device includes a processor, a memory, and a display. The memory and the display are coupled to the processor, the memory is configured to store computer program code, the computer program code includes computer instructions, and when the processor reads the computer instructions from the memory, the electronic device is enabled to perform: determining, based on obtained information of a second device, that the second device approaches or is in contact with a first device; in response to approach or contact of the second device, obtaining a first scenario corresponding to a first operation performed by a user on a scenario configuration interface of the first device, where the first scenario is associated with behavior of controlling at least one third device; and associating the first scenario with the second device.

According to the second aspect, after the first scenario is associated with the second device, when the processor reads the computer instructions from the memory, the electronic device is further enabled to perform: in response to approach or contact of the second device again, displaying, on the display, related information of the first scenario associated with the second device.

According to the second aspect or any implementation of the second aspect, the related information of the first scenario includes one or more of a device name of the second device, a scenario name of the first scenario, a trigger condition of the first scenario, a name of first space, a scenario identifier of the first scenario, an icon of the second device, and a remaining battery level of the second device.

According to the second aspect or any implementation of the second aspect, when the second device includes a plurality of buttons, and the first scenario is a configured scenario of a target button in the plurality of buttons, when the processor reads the computer instructions from the memory, the electronic device is further enabled to perform: in response to the approach or the contact of the second device again, displaying, on the display, details about a configured scenario of a button other than the target button in the plurality of buttons.

According to the second aspect or any implementation of the second aspect, when the processor reads the computer instructions from the memory, the electronic device is further enabled to perform: in response to a user operation, editing the first scenario; and associating the edited first scenario with the second device.

According to the second aspect or any implementation of the second aspect, associating the first scenario with the second device includes: locally storing or sending, to a server, a device identifier of the second device and device control information corresponding to the device identifier of the second device; or locally storing or sending, to a server, a device identifier of the second device and a scenario identifier of the first scenario associated with the second device.

According to the second aspect or any implementation of the second aspect, associating the first scenario with the second device includes: sending, to the second device, the device identifier of the second device and the device control information corresponding to the device identifier of the second device.

According to the second aspect or any implementation of the second aspect, the device control information includes operation code information and/or an operation event.

According to the second aspect or any implementation of the second aspect, the operation code information includes at least one operation code, and the at least one operation code indicates one or more of a button type, a button index, and a button operation type of a button of the second device.

According to the second aspect or any implementation of the second aspect, when the first device locally stores the device identifier of the second device and the device control information corresponding to the device identifier of the second device; or when the first device locally stores the device identifier of the second device and the scenario identifier of the first scenario associated with the second device, when the processor reads the computer instructions from the memory, the electronic device is further enabled to perform: receiving a first operation code sent by the second device; determining a first operation event corresponding to the first operation code; and sending operation indication information to at least one target third device, indicated by the first operation event, in the at least one third device.

According to the second aspect or any implementation of the second aspect, when the processor reads the computer instructions from the memory, the electronic device is further enabled to perform: determining, based on the obtained information of the second device, whether the second device is registered; and when the second device is not registered, registering with the server as a proxy for the second device based on the information of the second device; or when the second device is not registered, sending, to a fourth device, the information that is of the second device and that is used to complete registration for the second device.

According to the second aspect or any implementation of the second aspect, registering with the server as the proxy for the second device based on the information of the second device includes: obtaining a device identifier sent by the server, where the device identifier indicates the second device; and sending the device identifier to the second device.

According to the second aspect or any implementation of the second aspect, obtaining the first scenario corresponding to the first operation performed by the user on the scenario configuration interface of the first device includes: displaying the scenario configuration interface on the display, where the scenario configuration interface is used to display a scenario card; and determining, in response to the first operation performed by the user on the scenario configuration interface, the first scenario that is selected by the user and that corresponds to a first scenario card.

According to the second aspect or any implementation of the second aspect, when the processor reads the computer instructions from the memory, the electronic device is further enabled to perform: in response to a second operation performed by the user on the scenario configuration interface, editing the first scenario corresponding to the first scenario card.

According to the second aspect or any implementation of the second aspect, associating the first scenario with the second device includes: displaying a scenario writing animation effect on the display, where the scenario writing animation effect includes an animation effect that is presented on a display interface of the first device and in which a scenario display component corresponding to the first scenario is sucked into a placement area of the second device on the display interface.

According to the second aspect or any implementation of the second aspect, displaying the scenario configuration interface on the display includes: in response to an operation performed by the user on a scenario configuration component, displaying the scenario configuration interface on the display; or in response to the approach or the contact of the second device, displaying the scenario configuration interface on the display.

According to the second aspect or any implementation of the second aspect, when the processor reads the computer instructions from the memory, the electronic device is further enabled to perform: in response to an operation performed by the user on a second scenario card in the scenario card, displaying, on the display, scenario information of a second scenario corresponding to the second scenario card.

According to the second aspect or any implementation of the second aspect, the scenario configuration component is displayed on a first interface, the first interface is used to configure a device in first space, and a scenario corresponding to the first scenario card is a scenario that can be configured for the second device in the first space.

According to the second aspect or any implementation of the second aspect, a number is displayed on the first scenario card, the number indicates a ranking in which the user selects the scenario card, and the ranking matches a scenario writing ranking in which the first scenario is associated with the second device.

According to the second aspect or any implementation of the second aspect, a quantity of first scenario cards is less than or equal to a first threshold.

According to the second aspect or any implementation of the second aspect, associating the first scenario with the second device includes: determining, based on the information of the second device, that the second device includes a plurality of buttons; displaying a second interface on the display, where the second interface is used to display prompt information, and the prompt information indicates the user to select a target button of a to-be-configured scenario from the plurality of buttons; in response to a third operation performed by the user on the second interface, determining the target button; and associating the first scenario with the target button in the second device.

According to the second aspect or any implementation of the second aspect, when the processor reads the computer instructions from the memory, the electronic device is further enabled to perform: in response to the approach or the contact of the second device, determining whether a scenario is configured for the second device; and when a scenario is configured for the second device, displaying a device read interface on the display, where the device read interface is used to display detailed information of the scenario configured for the second device; or when a scenario is not configured for the second device, displaying the scenario configuration interface on the display, to perform scenario configuration of the second device.

According to the second aspect or any implementation of the second aspect, associating the first scenario with the second device includes: obtaining first identity information of the user; and associating the first scenario, the second device, and the first identity information based on the information of the second device.

For technical effect corresponding to the second aspect and any implementation of the second aspect, refer to the technical effect corresponding to the first aspect and any implementation of the first aspect. Details are not described herein again.

According to a third aspect, a configuration system is provided. The system includes a first device and a second device. The first device is configured to: determine, based on obtained information of the second device, that the second device approaches or is in contact with the first device; in response to approach or contact of the second device, obtain a first scenario corresponding to a first operation performed by a user on a scenario configuration interface of the first device, where the first scenario is associated with behavior of controlling at least one third device; and store a device identifier of the second device and device control information that is associated with a first scenario and that corresponds to the device identifier of the second device, where the device control information includes operation code information and/or an operation event. The second device is configured to send, to the first device in response to a user operation, a first operation code and/or a first operation event corresponding to the user operation. The first device is further configured to: receive the first operation code and/or the first operation event; send, based on the first operation code and/or the first operation event, operation indication information to at least one target third device, indicated by the first operation code and/or the first operation event, in at least one third device; and in response to approach or contact of the second device again, display related information of the first scenario associated with the second device.

According to the third aspect, the system further includes a server. The first device is further configured to send the device identifier of the second device and the device control information to the server; or send, to the server, the device identifier of the second device and a scenario identifier of the first scenario associated with the second device.

According to the third aspect or any implementation of the third aspect, the first device is further configured to send the device identifier of the second device and the device control information to the second device.

According to the third aspect or any implementation of the third aspect, the operation code information includes at least one operation code, and the at least one operation code indicates one or more of a button type, a button index, and a button operation type of a button of the second device.

According to the third aspect or any implementation of the third aspect, the first device is further configured to: determine, based on the obtained information of the second device, whether the second device is registered; and when the second device is not registered, register with the server as a proxy for the second device based on the information of the second device; or when the second device is not registered, send, to a fourth device, the information that is of the second device and that is used to complete registration for the second device.

According to the third aspect or any implementation of the third aspect, registering with the server as the proxy for the second device based on the information of the second device includes: obtaining a device identifier sent by the server, where the device identifier indicates the second device; and sending the device identifier to the second device.

For technical effect corresponding to the third aspect and any implementation of the third aspect, refer to the technical effect corresponding to the first aspect and any implementation of the first aspect. Details are not described herein again.

According to a fourth aspect, an electronic device is provided. The electronic device has a function of implementing the configuration method according to the first aspect and any possible implementation of the first aspect. The function may be implemented by hardware, or may be implemented by hardware executing corresponding software. The hardware or the software includes one or more modules corresponding to the function.

For technical effect corresponding to the fourth aspect and any implementation of the fourth aspect, refer to the technical effect corresponding to the first aspect and any implementation of the first aspect. Details are not described herein again.

According to a fifth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect.

For technical effect corresponding to the fifth aspect and any implementation of the fifth aspect, refer to the technical effect corresponding to the first aspect and any implementation of the first aspect. Details are not described herein again.

According to a sixth aspect, a computer program product is provided. When the computer program product runs on an electronic device, the electronic device is enabled to perform the method according to the first aspect or any implementation of the first aspect.

For technical effect corresponding to the sixth aspect and any implementation of the sixth aspect, refer to the technical effect corresponding to the first aspect and any implementation of the first aspect. Details are not described herein again.

According to a seventh aspect, a circuit system is provided. The circuit system includes a processing circuit, and the processing circuit is configured to perform the method according to the first aspect or any implementation of the first aspect.

For technical effect corresponding to the seventh aspect and any implementation of the seventh aspect, refer to the technical effect corresponding to the first aspect and any implementation of the first aspect. Details are not described herein again.

According to an eighth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to the first aspect or any implementation of the first aspect.

For technical effect corresponding to the eighth aspect and any implementation of the eighth aspect, refer to the technical effect corresponding to the first aspect and any implementation of the first aspect. Details are not described herein again.

### BRIEF DESCRIPTION OF DRAWINGS

FIG. 1(a) to FIG. 1(d) are a diagram of a scenario for configuring a smart switch according to an embodiment of this application;
FIG. 2 is a diagram of a communication system to which a configuration method according to an embodiment of this application is applied;
FIG. 3 is a diagram of a hardware structure of a first device according to an embodiment of this application;
FIG. 4 is a diagram of a hardware structure of a second device according to an embodiment of this application;
FIG. 5(a) to FIG. 5(c) are a diagram 1 of interfaces for configuring a scenario of a smart switch according to an embodiment of this application;
FIG. 6(a) to FIG. 6(c) are a diagram 2 of interfaces for configuring a scenario of a smart switch according to an embodiment of this application;
FIG. 7(a) to FIG. 7(c) are a diagram 3 of interfaces for configuring a scenario of a smart switch according to an embodiment of this application;
FIG. 8(a) to FIG. 8(c) are a diagram 4 of interfaces for configuring a scenario of a smart switch according to an embodiment of this application;
FIG. 9(a) to FIG. 9(c) are a diagram 5 of interfaces for configuring a scenario of a smart switch according to an embodiment of this application;
FIG. 10 is a diagram 6 of an interface for configuring a scenario of a smart switch according to an embodiment of this application;
FIG. 11(a) and FIG. 11(b) are a diagram 7 of interfaces for configuring a scenario of a smart switch according to an embodiment of this application;
FIG. 12(a) to FIG. 12(d) are a diagram 8 of interfaces for configuring a scenario of a smart switch according to an embodiment of this application;
FIG. 13(a) to FIG. 13(c) are a diagram 9 of interfaces for configuring a scenario of a smart switch according to an embodiment of this application;
FIG. 14(a) to FIG. 14(c) are a diagram 1 of interfaces for reading a smart switch according to an embodiment of this application;
FIG. 15 is a diagram 2 of an interface for reading a smart switch according to an embodiment of this application;
FIG. 16 is a diagram 3 of an interface for reading a smart switch according to an embodiment of this application;
FIG. 17 is a diagram 4 of an interface for reading a smart switch according to an embodiment of this application;
FIG. 18 is a diagram 5 of an interface for reading a smart switch according to an embodiment of this application;
FIG. 19 is a diagram 6 of an interface for reading a smart switch according to an embodiment of this application;
FIG. 20-1(a) and FIG. 20-1(b) are a diagram 7 of interfaces for reading a smart switch according to an embodiment of this application;
FIG. 20-2(a) to FIG. 20-2(c) are a diagram 8 of interfaces for reading a smart switch according to an embodiment of this application;
FIG. 21 is a diagram of a fingerprint collection interface according to an embodiment of this application;
FIG. 22 is a diagram of a registration procedure of a smart switch according to an embodiment of this application;
FIG. 23 is a schematic flowchart of a configuration method according to an embodiment of this application; and
FIG. 24 is a diagram of a structure of a first device according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe purposes of specific embodiments, but are not intended to limit this application. Terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Referring to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "have", and their variants all mean "include but are not limited to", unless otherwise specifically emphasized in another manner. A term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, a term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some scenarios, the smart switch may be used in a system like a smart home, to implement a smart scenario. For example, in a warm home scenario, a user may turn on a light at home, make an air conditioner automatically lower a temperature in a room, or the like with one tap by using the smart switch. For another example, in a safe home-leaving scenario, the user may turn off a plurality of devices such as a light, a door and a window, and an electrical appliance at home with one tap by using the smart switch.

Before using the smart switch, the user needs to perform device registration and scenario configuration.

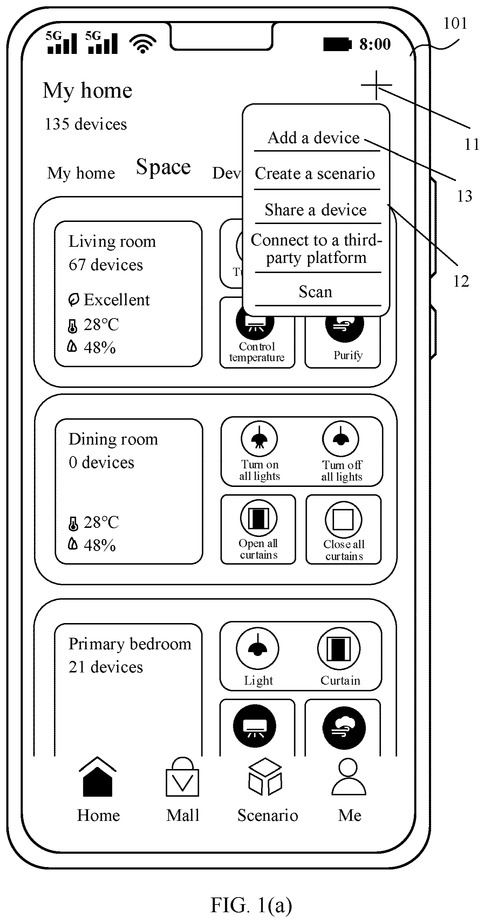

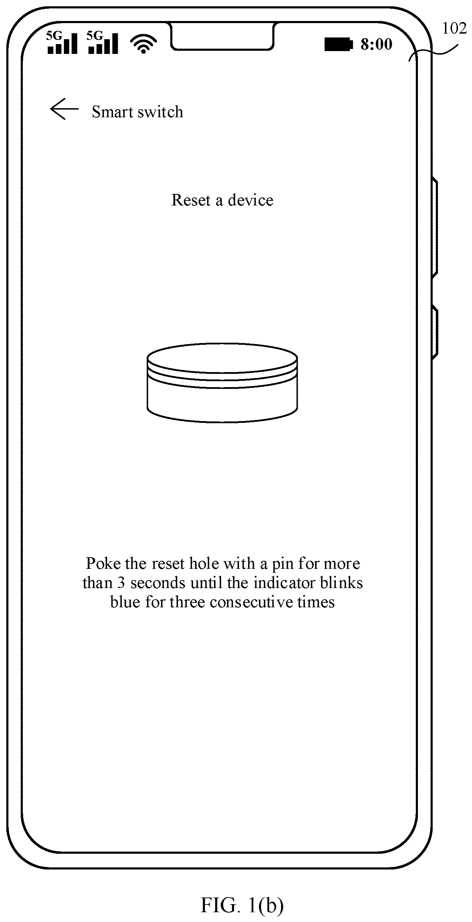

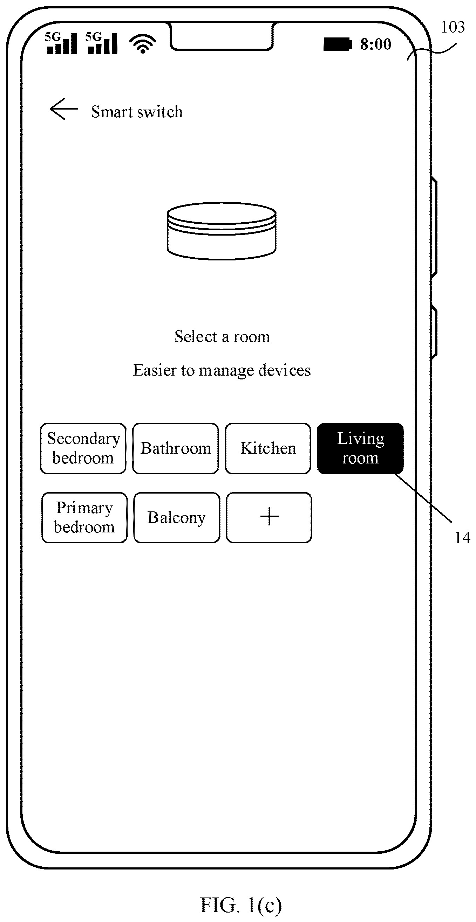

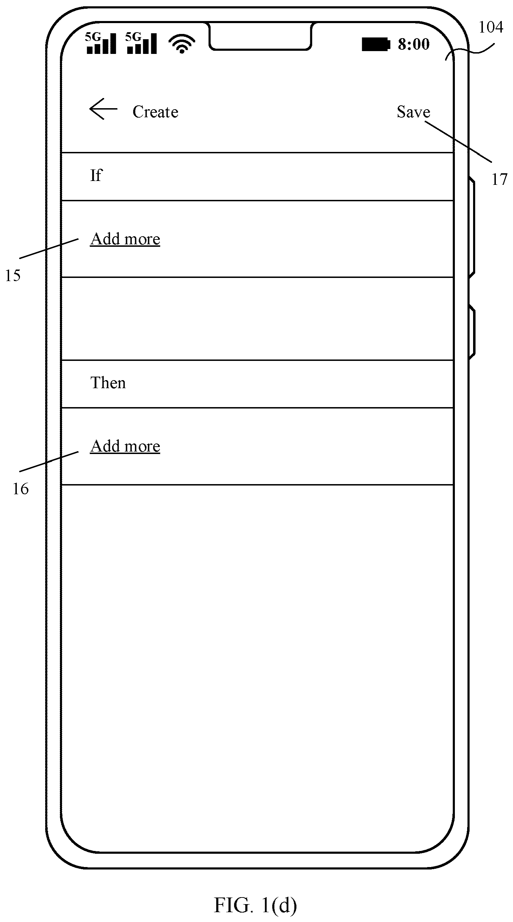

For example, on an interface 101 shown in FIG. 1(a), a user needs to first start, on a mobile phone, an application (for example, an AI Life application) used to manage smart home devices, to add a smart switch. For example, in a process of displaying the AI Life application, in response to an operation of tapping a control 11 by the user, the mobile phone displays a menu bar 12. The mobile phone detects an operation of tapping, by the user, an add device control 13 displayed on the menu bar 12, and determines that the user indicates to add a new device. If it is determined that the device that the user indicates to add is the smart switch, the mobile phone may display an interface 102 shown in FIG. 1(b), and prompt, on the interface 102, the user with an operation that needs to be performed on the smart switch. After performing an operation on the smart switch, the user may trigger the smart switch to send a Bluetooth broadcast signal. In this case, after detecting the Bluetooth broadcast signal, the mobile phone may trigger establishment of a Bluetooth connection to the smart switch, and obtain device information of the smart switch, to complete registration for the smart switch. After registration is completed, the mobile phone may display an interface 103 shown in FIG. 1(c), to prompt the user to select a room in which the smart switch is used. For example, the mobile phone detects an operation of tapping a living room control 14 by the user, and may display an interface 104 shown in FIG. 1(d). On the interface 104, the mobile phone may prompt the user to create a scenario in which the smart switch is used in the living room. For example, the user may add a scenario trigger condition through a control 15, and add, through a control 16, a scenario that needs to be executed. For example, in this scenario, the smart switch is tapped to turn on or off a light in the living room. Then, in response to an operation of tapping a save control 17 by the user, it may be determined that scenario configuration of the smart switch is completed.

It can be learned that, in this process, the user needs to separately perform an operation on a mobile phone application and the smart switch, and needs to have specific basic knowledge of smart home configuration, to complete device registration for and scenario configuration of the smart switch. As a result, it is difficult for the user to perform an operation, and user experience is affected.

Therefore, embodiments of this application provide a configuration method in which an electronic device can automatically complete device registration for and scenario configuration of a smart switch by using a near field communication technology. This simplifies a user operation and improves user experience.

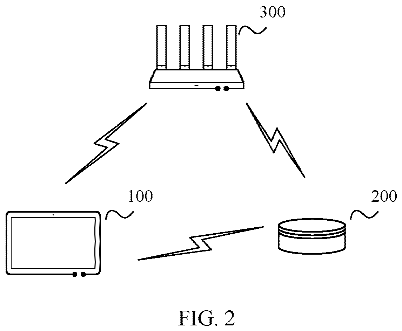

FIG. 2 is a diagram of a communication system to which a configuration method according to an embodiment of this application is applied. As shown in FIG. 2, the communication system includes a first device 100, a second device 200, and a server 300.

Optionally, the first device 100 may be configured to edit smart devices and smart scenarios of a whole house. The first device 100 is, for example, a terminal device configured with a display function, for example, a smart control panel, a mobile phone, a tablet computer, a notebook computer, an ultra-mobile personal computer (ultra-mobile personal computer, UMPC), a netbook, a personal digital assistant (personal digital assistant, PDA), a wearable device, or an artificial intelligence (artificial intelligence, AI) device. An operating system installed on the first device 100 includes but is not limited to iOS^{®}, Android^{®}, Harmony^{®}, Windows^{®}, Linux^{®}, or another operating system. A specific type of the first device 100 and an operating system installed on the first device are not limited in this application.

Optionally, the second device 200 is a control device in a smart home system. The second device 200 is, for example, a smart switch (or a smart button) or a movable smart switch. An operating system installed on the second device 200 includes but is not limited to iOS^{®}, Android^{®}, Harmony^{®}, Windows^{®}, Linux^{®}, or another operating system. Alternatively, no operating system may be installed on the second device 200. A specific type of the second device 200, whether an operating system is installed, and a type of an operating system when an operating system is installed are not limited in this application.

In some embodiments, the second device 200 may be smart switches (button) in a plurality of styles. For example, the second device 200 may be a circular single-button smart button shown in FIG. 2. Alternatively, the second device 200 may be a single-button smart button in another shape, a multi-button smart button, a smart button in a small touchscreen style, or a smart button integrating a mechanical button and a touch button. This is not limited in embodiments of this application.

Optionally, the server 300, serving as a home service hub, is configured to: manage and control a device (for example, the first device 100, the second device 200, or a smart home device) in the smart home system. The server 300 is, for example, a smart home device like a whole-house hub, a whole-house smart host, a whole-house smart light host, or a router. In some examples, the server 300 may alternatively be a cloud remote service. For example, the server 300 is a device or a server having a computing function, for example, a cloud server or a network server, may be a server, or a server cluster including a plurality of servers, or a cloud computing service center. In some other examples, the communication system includes a local server 300 and a cloud remote service, and both the server 300 and the cloud remote service may be used as the home service hub of the communication system. For example, the first device 100, the second device 200, and another smart home device in the communication system communicate with another smart home device via the server 300. When the server 300 is faulty, the first device 100, the second device 200, and the another smart home device in the communication system may alternatively communicate with the another smart home device by using the cloud remote service. A specific type of the server 300 is not limited in this application.

Optionally, the server 300 is a socket powered device in the communication system, and/or the server 300 is a resident device in the communication system.

In some embodiments, the first device 100 may establish a wireless communication connection to the second device 200 by using a wireless communication technology. The wireless communication technology includes but is not limited to at least one of the following: Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), power line communication (power line communication, PLC), near field communication (near field communication, NFC), ZigBee (ZigBee), frequency modulation (frequency modulation, FM), infrared (infrared, IR), and the like.

Optionally, the first device 100 and the second device 200 support a "tap to connect" operation. For example, after the second device 200 is in contact with an NFC sensing area of the first device 100, the first device 100 may obtain NFC tag information of the second device 200, and trigger the first device 100 to establish a wireless communication connection like Bluetooth to the second device 200.

Optionally, the first device 100 and the second device 200 support a proximity detection function. For example, after the first device 100 approaches the second device 200, the first device 100 and the second device 200 can discover each other, and then establish a wireless communication connection like a Bluetooth connection or a Wi-Fi peer-to-peer (peer to peer, P2P) connection.

In some embodiments, the communication system further includes a Bluetooth gateway, and the Bluetooth gateway is a gateway device integrating Bluetooth, Wi-Fi, and Ethernet. Optionally, there are one or more second devices 200 and one or more Bluetooth gateways.

In some examples, the first device 100 or the second device 200 communicates with the server 300 through the Bluetooth gateway.

Optionally, the first device 100 or the server 300 establishes a wired communication connection to the Bluetooth gateway through a network cable, a universal serial bus (universal serial bus, USB), or the like; or establishes a wireless communication connection to the Bluetooth gateway by using the wireless communication technology.

In some embodiments, the communication system further includes smart home devices. After scenario configuration of the second device 200 is completed, the user may implement scenario control by using the second device 200, to control a corresponding smart home device. The smart home device includes, for example, an audio and video device (for example, a large-screen device or a sound box), a lighting system device (for example, a table lamp or an electric light), an environment control device (for example, an air purifier or a robotic vacuum cleaner), a security system device (for example, a camera or a smart lock), a kitchen appliance (for example, an oven or a dishwasher), and a smart sensor.

In some embodiments, the communication system is, for example, a smart home system or a smart office system. In embodiments of this application, an example in which the communication system is a smart home system is used to describe in detail a configuration process of the second device 200.

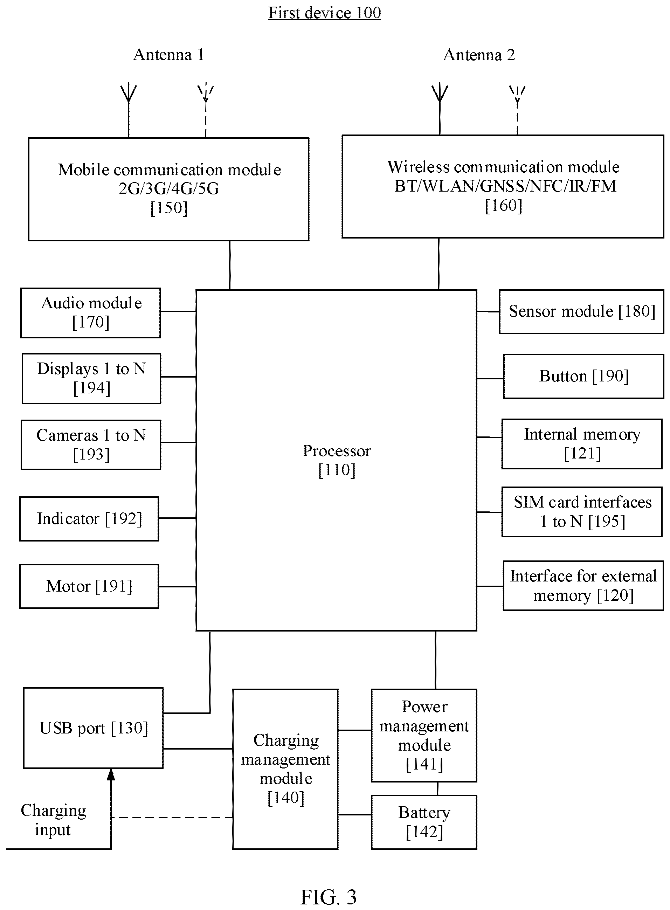

For example, FIG. 3 is a diagram of a structure of a first device 100.

The first device 100 may include a processor 110, an interface for external memory 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identification module (subscriber identification module, SIM) card interface 195, and the like.

It may be understood that the structure shown in embodiments of this application does not constitute a specific limitation on the first device 100. In some other embodiments of this application, the first device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first device 100. The processor 110 communicates with the display 194 through the DSI interface, to implement a display function of the first device 100.

The USB port 130 is a port that conforms to a USB standard specification, and may be specifically a mini USB port, a micro USB port, a USB Type-C port, or the like. The USB port 130 may be configured to connect to a charger to charge the first device 100, or may be configured to transmit data between the first device 100 and a peripheral device. The USB port 130 may alternatively be configured to connect to a headset, to play an audio through the headset. The port may alternatively be configured to connect to another electronic device like an AR device.

It may be understood that, an interface connection relationship between the modules shown in embodiments of this application is merely an example for description, and does not constitute a limitation on the structure of the first device 100. In some other embodiments of this application, the first device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the first device 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the first device 100 may be configured to cover one or more communication frequency bands. Different antennas may be further reused, to improve antenna utilization. For example, the antenna 1 may be reused as a diversity antenna in a wireless local area network. In some other embodiments, the antenna may be used in combination with a tuning switch.

The mobile communication module 150 may provide a wireless communication solution that is applied to the first device 100, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the first device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the first device 100 are coupled, and the antenna 2 and the wireless communication module 160 in the first device 100 are coupled, so that the first device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The first device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first device 100 may include one or N displays 194, where N is a positive integer greater than 1.

In some embodiments, the first device 100 displays an optional to-be-configured scenario on the display 194, and in response to an operation of selecting a scenario by a user, the first device 100 may directly determine a to-be-configured scenario of the second device 200. In this way, the user can complete scenario configuration of the second device 200 through a simple selection operation. This effectively reduces scenario configuration difficulty.

In some embodiments, when determining the to-be-written second device 200, the first device 100 may display prompt information on the display 194, to prompt the user to complete writing of the second device 200 by using the NFC "tap to connect" function. In response to the "tap to connect" operation of the second device 200, the first device 100 may read the NFC tag information of the second device 200, to automatically complete registration for the second device 200. In this way, the user can complete registration for the second device 200 through the simple "tap to connect" operation. This effectively reduces device registration difficulty.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first device 100 may include one or N cameras 193, where N is a positive integer greater than 1.

The interface for external memory 120 may be used to connect to an external storage card, for example, a micro SD card, to extend a storage capability of the first device 100. The external memory card communicates with the processor 110 through the interface for external memory 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound play function or an image play function), and the like. The data storage area may store data (such as audio data and an address book) created during use of the first device 100, and the like. In addition, the internal memory 121 may include a high-speed random access memory, and may further include a nonvolatile memory, for example, at least one magnetic disk storage device, a flash storage device, a universal flash storage (universal flash storage, UFS), and the like. The processor 110 runs instructions stored in the internal memory 121 and/or instructions stored in the memory disposed in the processor, to perform various function applications and data processing of the first device 100.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110. The first device 100 may use the audio module 170 to implement music playing, recording, and the like. The audio module 170 may include a speaker, a receiver, a microphone, a headset jack, an application processor, and the like, to implement an audio function.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. One or N buttons 190 may be configured in the first device 100, where N is a positive integer greater than 1. The first device 100 may support one or N SIM card interfaces, where N is a positive integer greater than 1. The first device 100 may receive a button input, and generate a button signal input related to a user setting and function control of the first device 100.

The motor 191 may generate a vibration prompt. The motor 191 may be configured to provide an incoming call vibration prompt, or may also be configured to provide touch vibration feedback. The indicator 192 may be an indicator light, and may be configured to indicate a charging status and a power change, or may be configured to indicate a message, a missed call, a notification, and the like. The SIM card interface 195 is configured to connect to a SIM card. The first device 100 may support one or N SIM card interfaces, where N is a positive integer greater than 1.

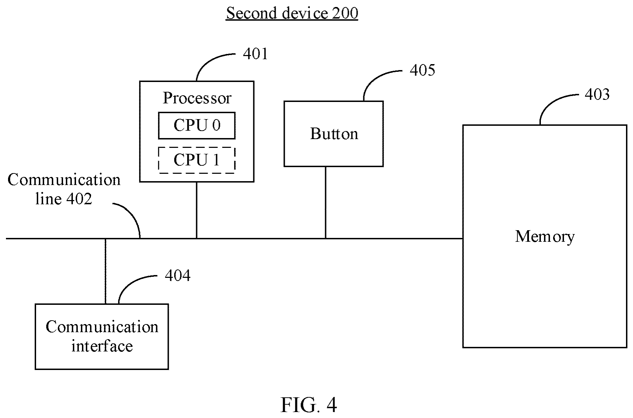

For example, FIG. 4 is a diagram of a structure of the second device 200.

The second device 200 includes at least one processor 401, a communication line 402, a memory 403, at least one communication interface 404, and a button 405. The memory 403 may alternatively be included in the processor 401.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path for transmitting information between the foregoing components.

The communication interface 404 is configured to communicate with another device. In embodiments of this application, the communication interface may be a module, a circuit, a bus, an interface, a transceiver, or another apparatus that can implement a communication function, and is configured to communicate with another device. Optionally, when the communication interface is the transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates information sending and receiving functions. A specific implementation of the transceiver is not limited in embodiments of this application.

The memory 403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage, a magnetic disk storage medium or another magnetic storage device, or any other medium that can be used to carry or store expected program code in a form of instructions or a data structure and that can be accessed by a computer. However, this is not limited thereto. The memory may exist independently, and is connected to the processor through the communication line 402. The memory may alternatively be integrated with the processor.

The memory 403 is configured to store computer-executable instructions for implementing the solutions of this application, and the processor 401 controls execution. The processor 401 is configured to execute the computer-executable instructions stored in the memory 403, to implement a data processing method provided in the following embodiments of this application.

Optionally, the computer-executable instructions in embodiments of this application may also be referred to as application code, instructions, a computer program, or another name. This is not specifically limited in embodiments of this application.

In a specific implementation, in an embodiment, the processor 401 may include one or more CPUs, for example, a CPU 0 and a CPU 1 in FIG. 4.

In a specific implementation, in an embodiment, the second device 200 may include a plurality of processors. Each of the processors may be a single-core (single-CPU) processor, or may be a multi-core (multi-CPU) processor. The processor herein may be one or more devices, circuits, and/or processing cores configured to process data (for example, computer program instructions).

The button 405 may be a mechanical button, or may be a touch button. The second device 200 may include one or N buttons 405, where N is a positive integer greater than or equal to 1.

It may be understood that, the structure shown in FIG. 4 in this embodiment of this application does not constitute a unique limitation on an implementation of the structure of the second device 200. In some other embodiments of this application, the second device 200 may include more or fewer components than those shown in the figure, or a combination of some components, or splits from some components, or a different component layout. The components shown in the figure may be implemented by hardware, software, or a combination of software and hardware.

The following describes in detail the configuration method provided in embodiments of this application by using an example in which the first device 100 is a smart control panel, the second device 200 is a smart switch, the server 300 is a whole-house hub, and an applied communication system is a smart home system.

In some embodiments, a user may manage and control the smart switch by using the smart control panel, for example, complete registration for and scenario configuration of the smart switch.

In some examples, in a scenario configuration process of the smart switch, the smart control panel may automatically generate a corresponding to-be-configured scenario. In response to an operation performed by the user on the smart control panel, a to-be-configured scenario selected by the user may match the smart switch by using the smart control panel. In this way, even if the user does not have basic knowledge of smart home configuration, the user can complete scenario configuration of the smart switch through a simple operation, and the user does not need to perform a complex operation (for example, an operation of poking a reset hole on the smart switch with a pin) on the smart switch. This effectively reduces user operation difficulty.

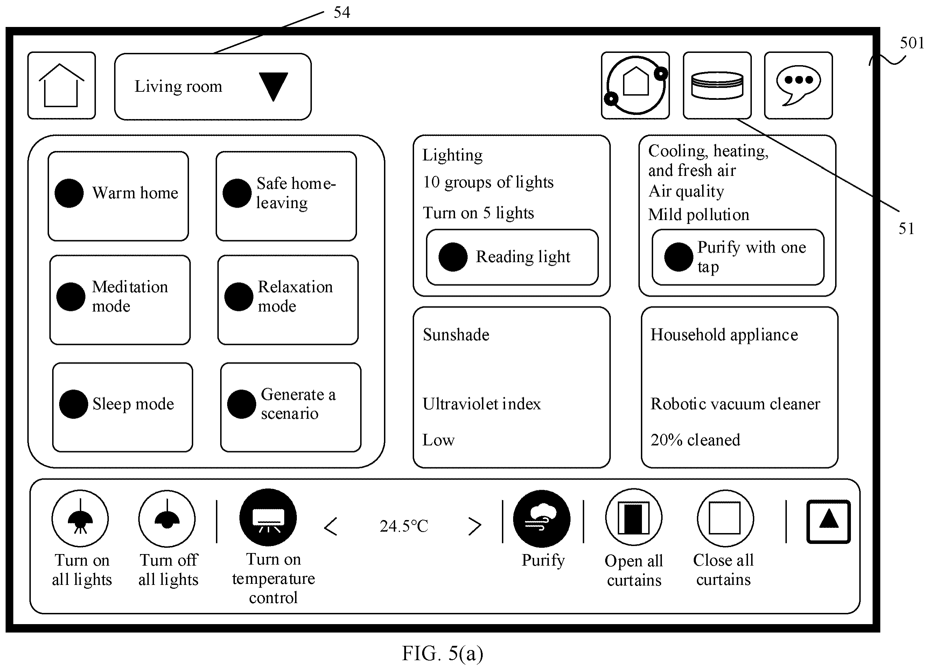

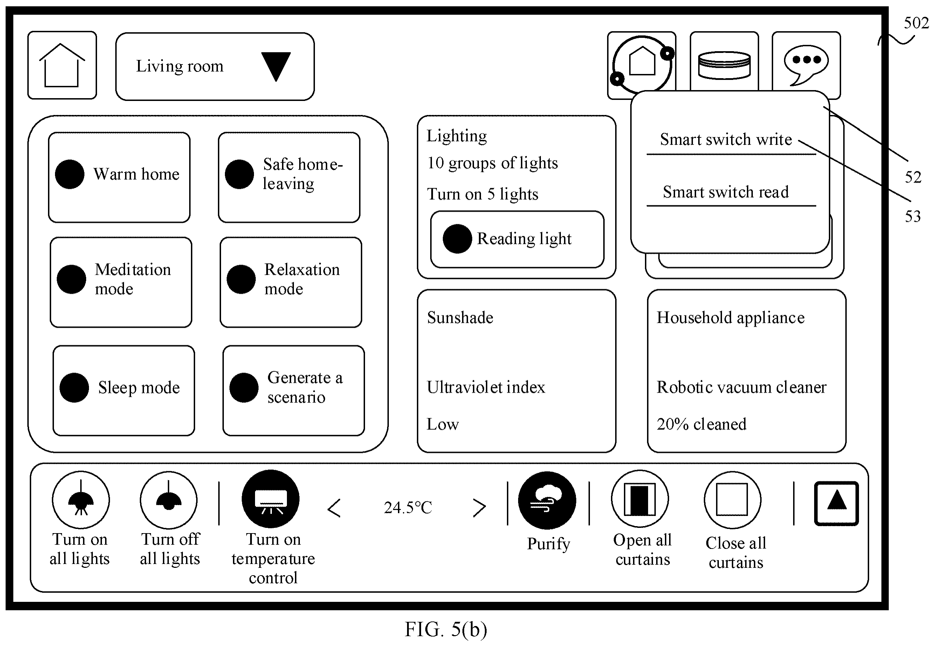

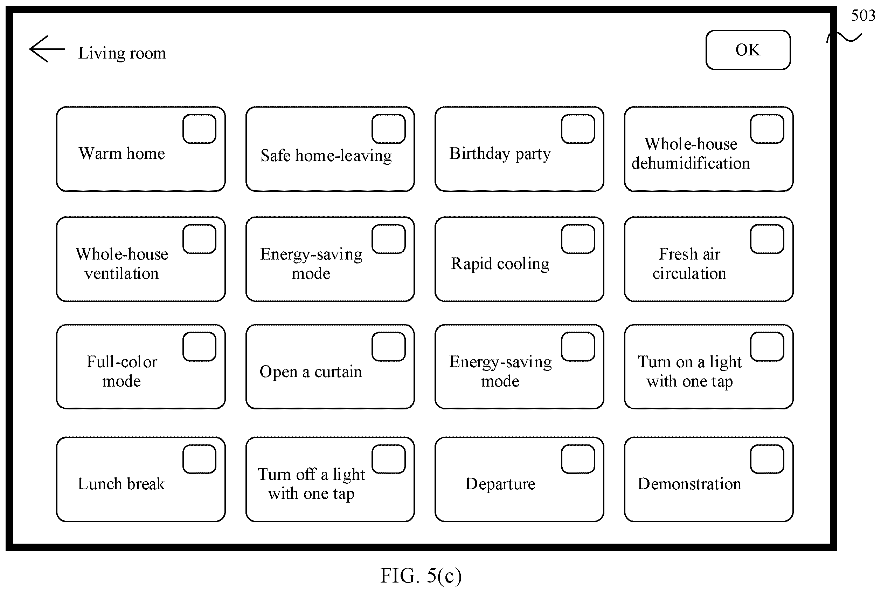

For example, on an interface 501 shown in FIG. 5(a), the smart control panel detects an operation performed by the user on a control 51, determines that the user indicates to perform an operation on the smart switch, and the smart control panel may display an interface 502 shown in FIG. 5(b). A menu bar 52 corresponding to the control 51 is displayed on the interface 502. The smart control panel detects an operation performed by the user on a smart switch write control 53 in the menu bar 52, and may determine that the user indicates to write the smart switch. In a process of writing the smart switch, the smart control panel may configure a scenario of the smart switch. As shown by a control 54 on the interface 501, the smart control panel may determine that a currently edited space is a living room. In this case, the smart control panel may determine a scenario that can be configured for the smart switch in the living room space. On an interface 503 shown in FIG. 5(c), the smart control panel displays scenario cards corresponding to scenarios that can be configured for the smart switch in the living room space, and the user may directly select, from the scenario cards, a scenario that needs to be configured for the smart switch. Compared with the scenario configuration process of the smart switch shown in FIG. 1(a) to FIG. 1(d), in this scenario configuration process, the user does not need to add trigger conditions in scenarios and scenario operations that need to be performed one by one, but directly selects a preset to-be-configured scenario. This enriches scenarios that can be configured and simplifies a user operation. Then, in response to an NFC "tap to connect" operation performed by the user on the smart switch and the smart control panel, the to-be-configured scenario selected by the user may be associated with the smart switch. In this way, scenario configuration of the smart switch can be completed through simple interaction between the smart control panel and the smart switch. This effectively reduces user operation difficulty.

The following describes a specific implementation in the scenario configuration process.

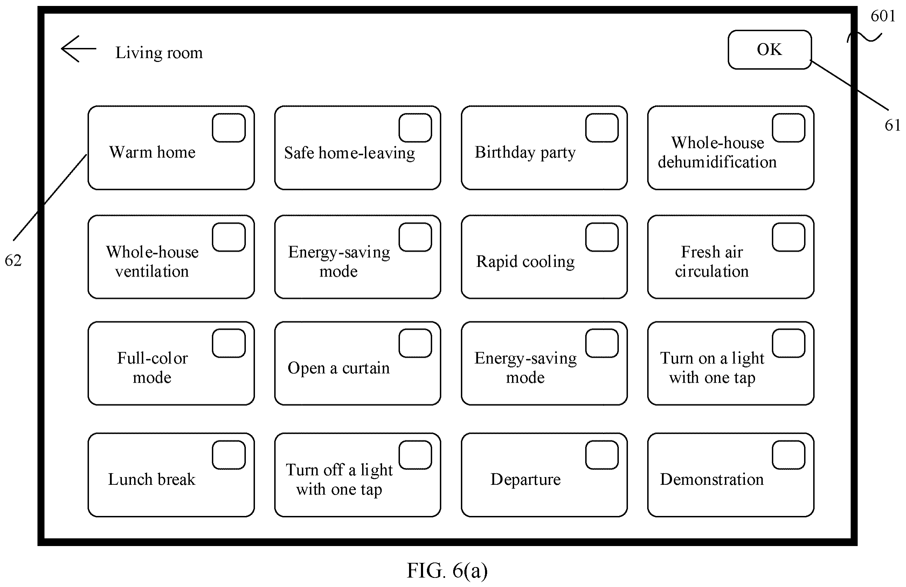

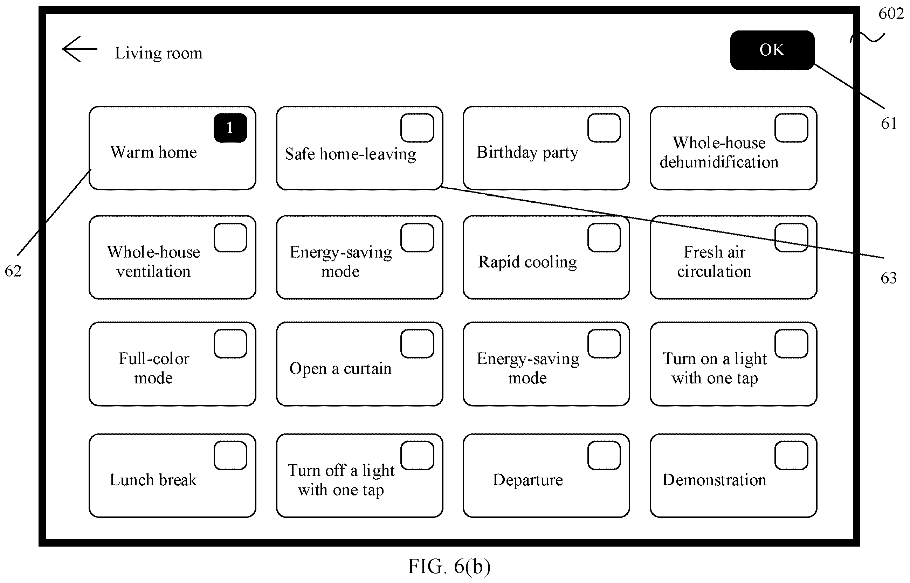

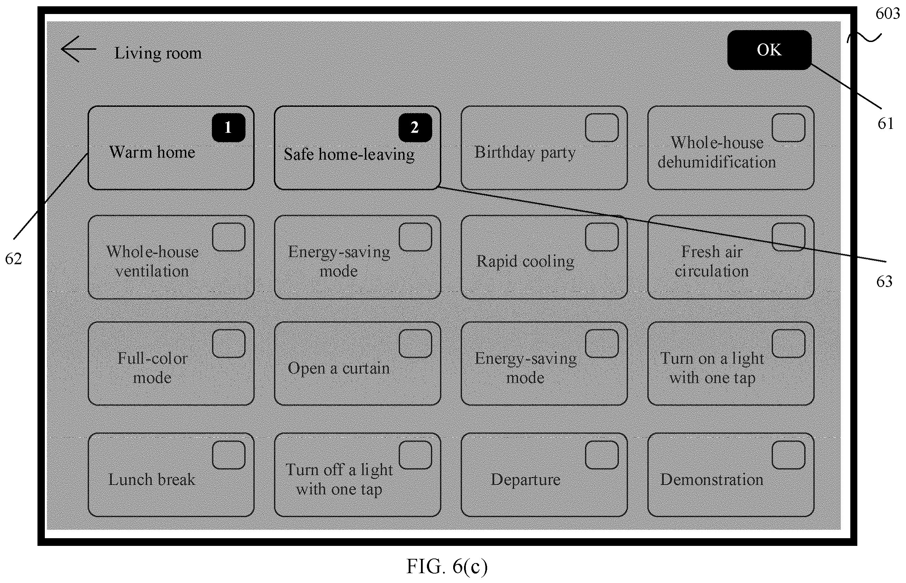

For example, on an interface 601 shown in FIG. 6(a), the smart control panel displays scenario cards corresponding to scenarios that can be configured for the smart switch in the living room space. If the user does not select a scenario currently, an OK control 61 is in an inoperable state. For example, the OK control 61 is displayed in gray. Then, the smart control panel detects an operation performed by the user on a warm home scenario card 62, determines that the user chooses to add a warm home scenario, and the smart control panel displays an interface 602 shown in FIG. 6(b). On the interface 602, the smart control panel displays the warm home scenario card 62 in a selected state, and activates the OK control 61 to make the OK control 61 be in an operable state. The smart switch may display a number on the scenario card selected by the user, to prompt the user with a selection ranking and a quantity of to-be-configured scenarios. For example, the smart control panel displays a number 1 on the currently selected warm home scenario card 62. Then, the smart control panel detects an operation performed by the user on a safe home-leaving scenario card 63, determines that the user chooses to add a safe home-leaving scenario, and the smart control panel displays an interface 603 shown in FIG. 6(c). On the interface 603, the smart control panel displays the warm home scenario card 62 and the safe home-leaving scenario card 63 that are in the selected state, and displays a number 2 on the safe home-leaving scenario card 63, to indicate that a quantity of to-be-configured scenarios currently selected by the user is 2. In addition, a scenario configuration sequence is first configuring the warm home scenario and then configuring the safe home-leaving scenario.

In some examples, a scenario configuration quantity threshold of the smart switch is preset in the smart control panel, and the scenario configuration quantity threshold indicates a maximum quantity of scenarios that can be configured for the smart switch. For example, if the scenario configuration quantity threshold is 2, the smart switch determines that a maximum of two scenarios can be configured for the smart switch. It should be understood that a value of the scenario configuration quantity threshold is not limited in embodiments of this application.

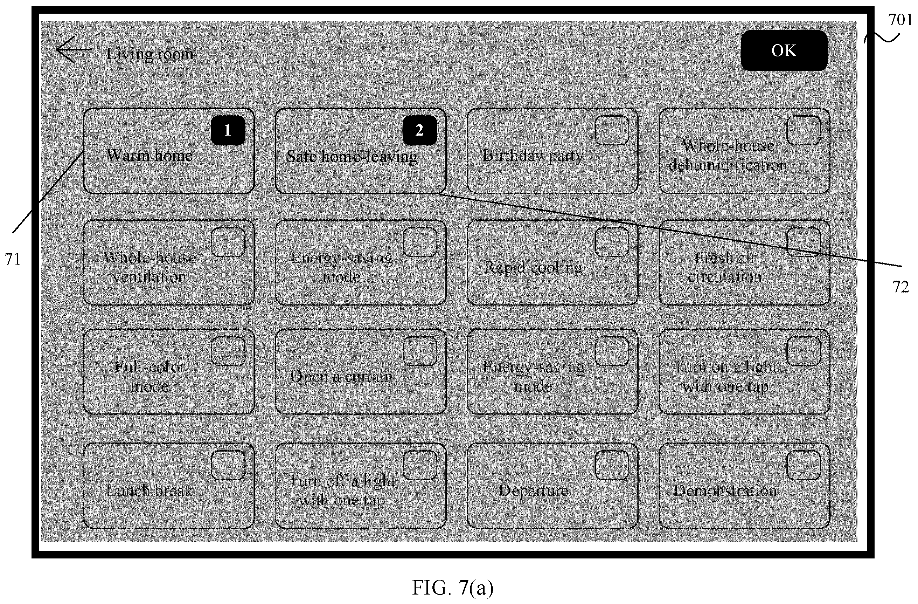

For example, on an interface 701 shown in FIG. 7(a), the smart control panel displays a warm home scenario card 71 and a safe home-leaving scenario card 72 that are in the selected state, indicating that the user currently selects two to-be-configured scenarios. The smart control panel determines, based on the scenario configuration quantity threshold, that the user currently selects the maximum quantity of scenario cards. In this case, the smart control panel may display other scenario cards in an inoperable state, to inform the user that a maximum of two to-be-configured scenarios can be selected.

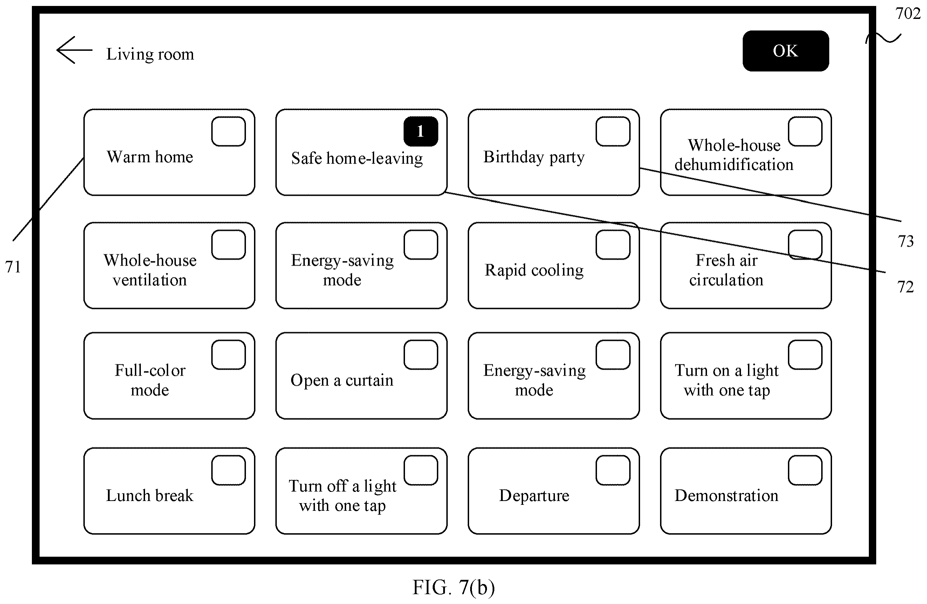

For another example, on the interface 701 shown in FIG. 7(a), the smart control panel detects an operation performed by the user on the warm home scenario card 71 in the selected state, and determines that the user indicates to cancel selection of the warm home scenario card 71. In this case, on an interface 702 shown in FIG. 7(b), the smart control panel may display the warm home scenario card 71 in an unselected state. In addition, the smart control panel changes a number on the safe home-leaving scenario card 72 from a number 2 shown on the interface 701 to a number 1 shown on the interface 702, to inform the user that the currently selected scenario includes only the safe home-leaving scenario.

In addition, as shown on the interface 702, if the smart control panel determines that a quantity of to-be-configured scenarios currently selected by the user is less than the scenario configuration quantity threshold, the smart control panel may display other scenario cards in an operable state, to prompt the user to continue to select a to-be-configured scenario.

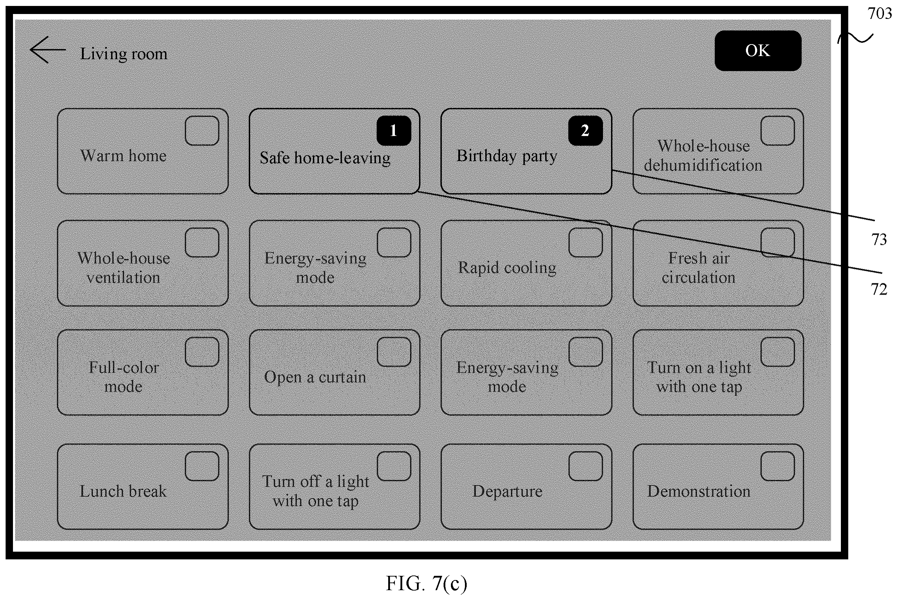

For example, in a process of displaying the interface 702, the smart control panel further detects an operation performed by the user on a birthday party scenario card 73, and determines that the user chooses to add a birthday party scenario. The smart control panel displays an interface 703 shown in FIG. 7(c).

In some embodiments, after determining that the user completes selection of the to-be-configured scenario, the smart control panel may prompt the user to perform the NFC "tap to connect" operation, to bind the to-be-configured scenario selected by the user to the smart switch, so as to complete scenario configuration of the smart switch.

In this way, the user can complete scenario configuration of the smart switch through the simple "tap to connect" operation. Compared with the conventional technology in which the user needs to poke a reset hole on the smart switch with a pin to complete scenario configuration of the smart switch, in the configuration method provided in embodiments of this application, the user operation can be effectively simplified, the user operation difficulty is reduced, user learning costs are reduced, and user experience is improved.

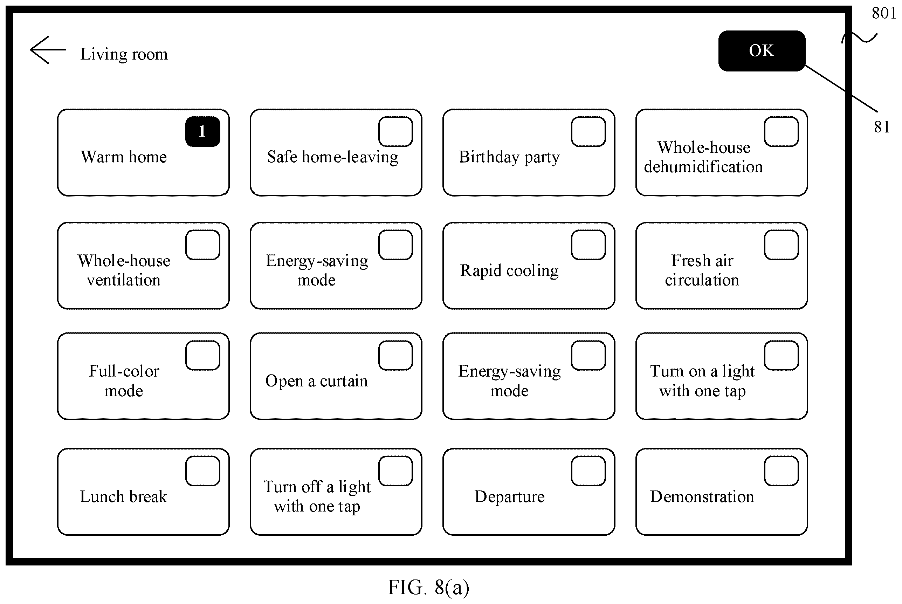

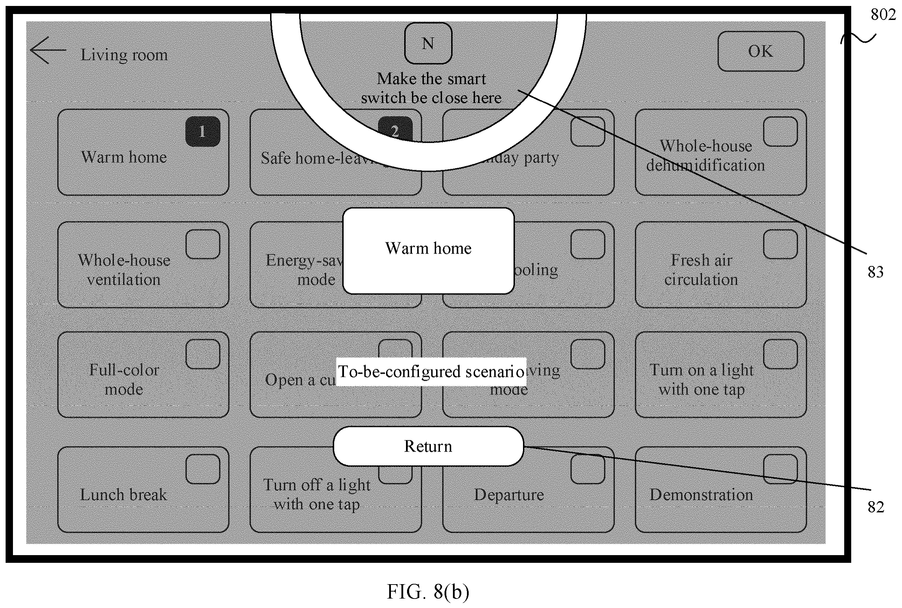

For example, on an interface 801 shown in FIG. 8(a), the smart control panel detects an operation performed by a user on an OK control 81, determines that the user completes selection of the to-be-configured scenario, and may display an interface 802 shown in FIG. 8(b). On the interface 802, the smart control panel displays a scenario card corresponding to the to-be-configured scenario selected by the user, for example, the warm home scenario card. If the smart control panel detects an operation performed by the user on a return control 82, the smart control panel determines that the user indicates to reselect a to-be-configured scenario. In this case, the smart control panel may return to the display interface 801, and the user may continue to select a to-be-configured scenario on the interface 801.

On the interface 802, as shown by a reference numeral 83, the smart control panel displays prompt information, to prompt the user to make the smart switch be close to an NFC sensing area of the smart control panel, that is, indicate the user to perform the NFC "tap to connect" operation. Then, if the smart control panel detects that the smart switch approaches the NFC sensing area, the smart control panel may obtain NFC tag information of the smart switch, and obtain device information of the smart switch included in the NFC tag information. Then, the smart control panel binds the to-be-configured scenario to the smart switch based on the device information, for example, writes the to-be-configured scenario into the smart switch. In this way, after the user subsequently performs an operation on the smart switch, the smart switch sends a signal to the smart control panel, and the smart control panel may determine a corresponding scenario based on an identifier of the smart switch and a signal type that are carried in the signal, to trigger the scenario. For example, the warm home scenario includes turning on a light in the living room. In this case, after receiving a signal sent by the smart switch, the smart control panel may send indication information to the light in the living room, to turn on the light in the living room.

Optionally, the near field sensing area (for example, the NFC sensing area or a Bluetooth sensing area) of the smart control panel may include accommodation space for placing the smart switch. For example, the user may make the smart switch be in contact with the NFC sensing area of the smart control panel, to trigger the smart control panel to read the NFC tag information of the smart switch. In some scenarios, it is inconvenient for the user to keep the smart switch in contact with the NFC sensing area of the smart control panel, and it is difficult to ensure that the smart control panel completes reading of the NFC tag information of the smart switch. For example, the smart control panel is a wall operation device. In this case, the user may place the smart switch in the accommodation space of the smart control panel, to ensure that the smart control panel can correctly read the NFC tag information of the smart switch. This reduces the user operation difficulty. Optionally, the accommodation space may be, for example, an accommodation groove or a clamping groove. Optionally, the accommodation space of the smart switch may alternatively be disposed independent of the control panel. Optionally, in a sensing manner supported by some near field communication protocols, the smart switch may not be required to be continuously placed in the near field sensing area of the control panel.

Optionally, in a scenario trigger process, the smart switch may send a signal to at least one of the smart control panel, a Bluetooth gateway, a whole-house hub, and a smart home device corresponding to a scenario, to trigger the scenario. For example, the smart switch sends a signal to the whole-house hub through the Bluetooth gateway, the smart switch directly sends a signal to the whole-house hub, the smart switch sends a signal to the whole-house hub through the smart control panel, or the smart switch sends a signal to the whole-house hub through the Bluetooth gateway and the smart control panel, to trigger, through the whole-house hub, control of a smart home device corresponding to a scenario, to trigger the scenario. For another example, the smart switch directly sends a signal to the smart control panel, or the smart switch sends a signal to the smart control panel through the Bluetooth gateway, to trigger, through the smart control panel, control of a smart home device corresponding to a scenario, to trigger the scenario. For another example, the smart switch directly sends a signal to the smart home device corresponding to a scenario, to trigger the scenario.

Correspondingly, after completing scenario configuration of the smart switch, the smart control panel may locally store configured scenario information or send the configured scenario information to the corresponding another device, so that the smart switch subsequently triggers the scenario. This is not described below.

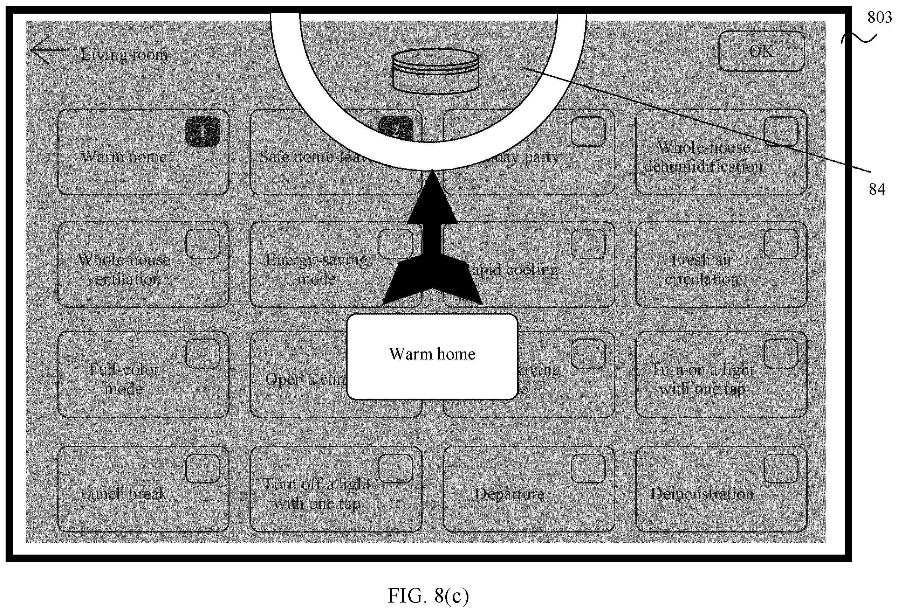

Optionally, the smart control panel detects that the smart switch approaches the NFC sensing area, and in a process of writing a scenario, the smart control panel may display a scenario writing animation effect, to inform the user that the scenario is being written into the smart switch. Optionally, the scenario writing animation effect includes a plurality of animation effects in which a scenario card moves to the smart switch or a scenario card is sucked into the smart switch. For example, on an interface 803 shown in FIG. 8(c), the smart control panel displays a scenario writing animation effect. For example, the smart control panel displays a scenario writing animation effect in which the warm home scenario card moves to an icon of the smart switch indicated by a reference numeral 84. Optionally, the icon indicated by the reference numeral 84 and a semicircular area matching the icon may be explicitly presented on the configuration scenario page, or may be implicitly not presented on the user interface.

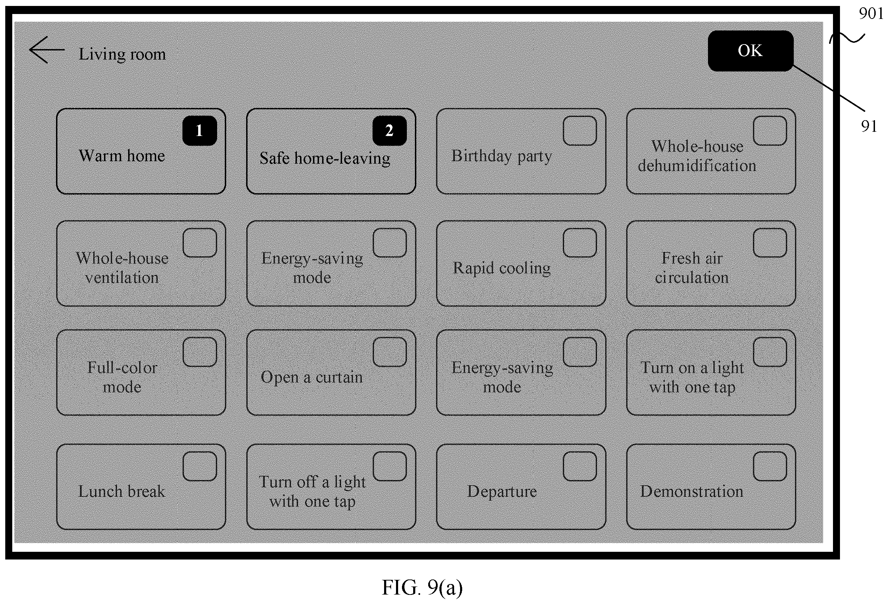

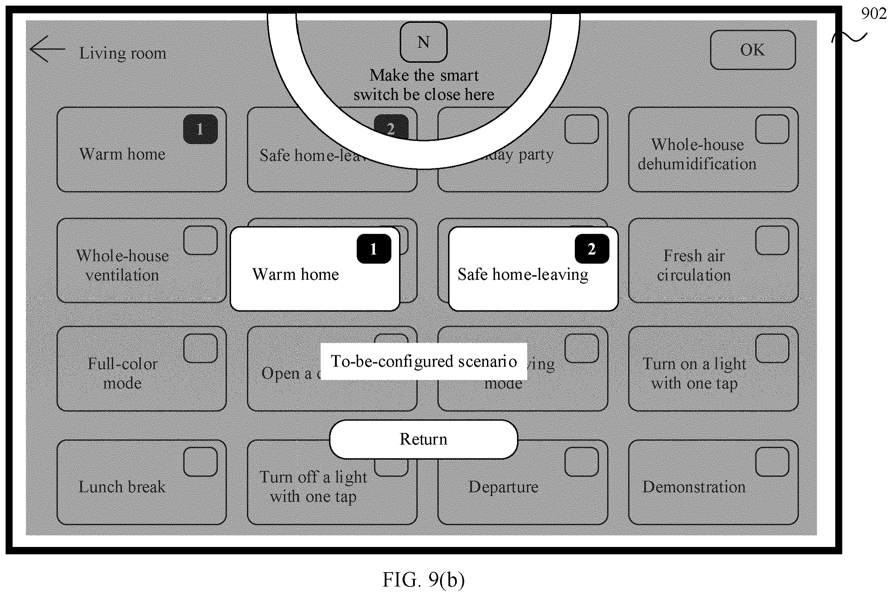

For another example, on an interface 901 shown in FIG. 9(a), the smart control panel displays a warm home scenario card and a safe home-leaving card that are selected by the user, and displays other scenario cards in an inoperable state. Then, if the smart control panel detects an operation performed by the user on an OK control 91, the smart control panel determines that the user completes selection of the to-be-configured scenario, and may display an interface 902 shown in FIG. 9(b). On the interface 902, the smart control panel displays the scenario cards corresponding to the two to-be-configured scenarios that are selected by the user, for example, the warm home scenario card and the safe home-leaving card. The smart control panel may display the scenario cards in a sequence in which the user selects the scenario cards, for example, sequentially display a plurality of scenario cards in a left-to-right sequence, or display numbers corresponding to selection rankings on the scenario cards, to implement sequential scenario writing.

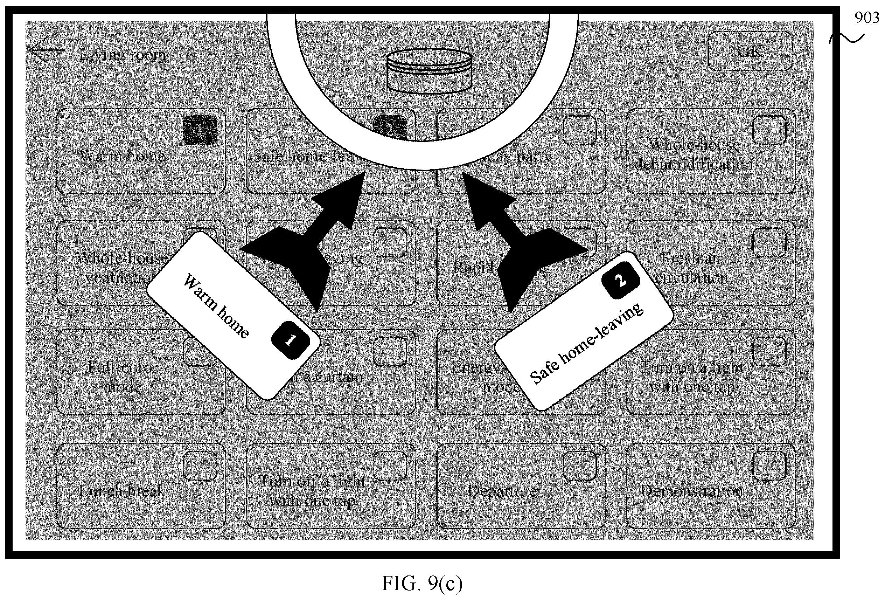

In addition, on the interface 902, the smart control panel displays prompt information, to prompt the user to make the smart switch be close to the NFC sensing area of the smart control panel, that is, indicate the user to perform the NFC "tap to connect" operation. Then, if the smart control panel detects that the smart switch approaches the NFC sensing area, the smart control panel may write the to-be-configured scenario into the smart switch. In a scenario writing process, the smart control panel may display scenario writing animation effects displayed on an interface 903 shown in FIG. 9(c).

In some embodiments, when no scenario is written into the smart switch, in response to an operation (for example, the NFC "tap to connect" operation) through which the user indicates to write a scenario, the smart control panel writes the to-be-configured scenario into the blank smart switch. Alternatively, when a scenario is configured for the smart switch, in response to an operation (for example, the NFC "tap to connect" operation) through which the user indicates to write a scenario, the smart control panel writes the to-be-configured scenario into the smart switch, to overwrite the scenario that is written into the smart switch.

In some embodiments, in response to the operation through which the user indicates to write the smart switch (for example, the operation performed on the smart switch write control 53 on the interface 502 shown in FIG. 5(b)), the smart control panel may alternatively first display the prompt information, to prompt the user to make the smart switch be close to the NFC sensing area of the smart control panel. Then, after obtaining the NFC tag information of the smart switch, the smart control panel displays a scenario configuration interface, and receives an operation of selecting the to-be-configured scenario by the user. In this case, after detecting the operation indicated by the user that the to-be-configured scenario is selected, the smart control panel may directly write, into the smart switch, the to-be-configured scenario selected by the user, and does not need to inform the user to perform the NFC "tap to connect" operation again. In other words, a sequence of the to-be-configured scenario selection operation and the NFC "tap to connect" operation is not limited in embodiments of this application.

Optionally, in the foregoing implementation, if the smart control panel first detects the NFC "tap to connect" operation, the smart control panel may determine whether a scenario is configured for the smart switch. When a scenario is configured for the smart switch, the smart control panel may obtain information of the scenario configured for the smart switch. In this case, in the process of displaying the scenario configuration interface, the smart control panel may display, in a selected state, a scenario card corresponding to the scenario configured for the smart switch. In this way, the user may determine whether the scenario configured for the smart switch is a required scenario. If the scenario configured for the smart switch is the required scenario, the user may directly end the scenario configuration. If the scenario configured for the smart switch is not the required scenario, the user may alternatively edit the to-be-configured scenario, for example, reselect a to-be-configured scenario. This improves operability of the user, and improves user experience.

In some embodiments, the smart switch includes one or more buttons, and a same scenario or different scenarios may be configured for different buttons. In this case, in the scenario configuration process, the smart control panel may prompt the user to select a button for a current to-be-configured scenario.

Optionally, after determining the to-be-configured scenario selected by the user and detecting the NFC "tap to connect" operation, the smart control panel determines that the smart switch for the current to-be-configured scenario includes a plurality of buttons. In this case, the smart control panel may display a button selection interface, to determine a button into which the currently obtained to-be-configured scenario is written.

Optionally, in a button selection process, the user may choose to configure the to-be-configured scenario in one or more buttons.

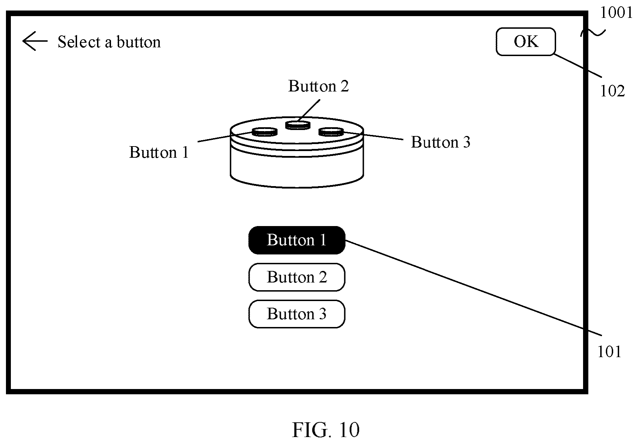

For example, in the process of displaying the interface 902 shown in FIG. 9(b), the smart control panel detects the NFC "tap to connect" operation, obtains the NFC tag information of the smart switch, and determines, based on the device information in the NFC tag information, that the smart switch includes three buttons. In this case, on an interface 1001 shown in FIG. 10, the smart control panel may display an icon of the smart switch, and display button selection controls. The user may select a button for the to-be-configured scenario on the interface 1001 through the button selection control. For example, if the smart control panel detects an operation performed by the user on a button 1 control 101, and detects an operation performed by the user on an OK control 102, it may be determined that the user indicates to write the to-be-configured scenario into a button 1 of the smart switch. Then, the smart control panel may write the to-be-configured scenario into the button 1 of the smart switch, and display scenario writing animation effects of the warm home scenario and the safe home-leaving scenario that are shown on the interface 903 in FIG. 9(c). In other words, after the scenario is written, the user may correspondingly trigger the warm home scenario and the safe home-leaving scenario by controlling different states (for example, an on/off state or a tap/double-tap operation) of the button 1 of the smart switch respectively.

For another example, in the process of displaying the interface 502 shown in FIG. 5(b), the smart control panel detects the operation performed by the user on the smart switch write control 53, and displays the prompt information, to prompt the user to make the smart switch be close to the NFC sensing area of the smart control panel. Then, the smart control panel detects the NFC "tap to connect" operation, obtains the NFC tag information of the smart switch, and determines, based on the device information in the NFC tag information, that the smart switch includes the three buttons. In this case, the smart control panel may display the interface 1001 shown in FIG. 10. On the interface 1001, after the smart control panel determines the button selected by the user, the smart control panel may display the scenario configuration interface, receive the operation of selecting the to-be-configured scenario by the user, and write, into the determined button of the smart switch, the to-be-configured scenario selected by the user.

In some embodiments, in the scenario configuration process, in response to a user operation, the smart control panel may display details about the to-be-configured scenario, so that the user learns of the to-be-configured scenario. Optionally, the details about the to-be-configured scenario include, for example, a scenario trigger condition, a smart home device controlled after the scenario is triggered, and an operation performed by the corresponding smart home device after the scenario is triggered.

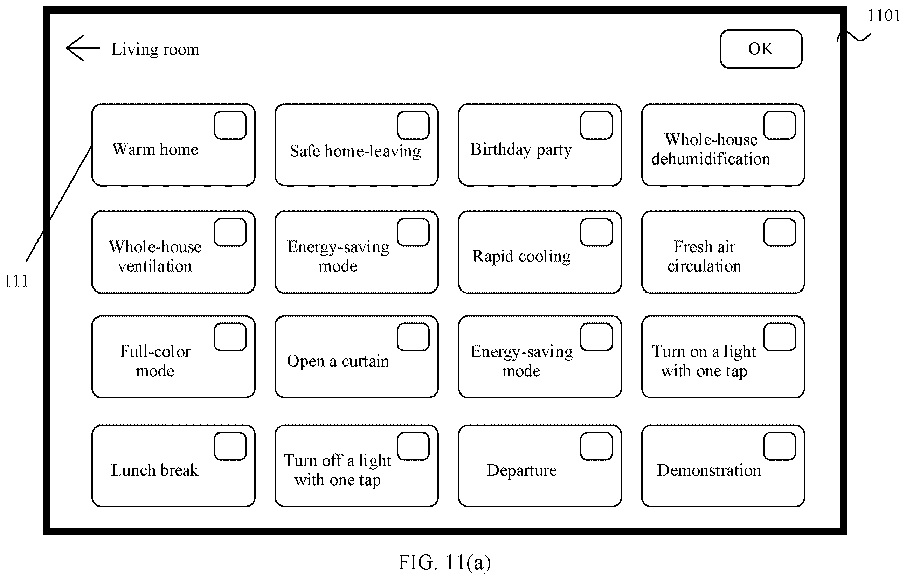

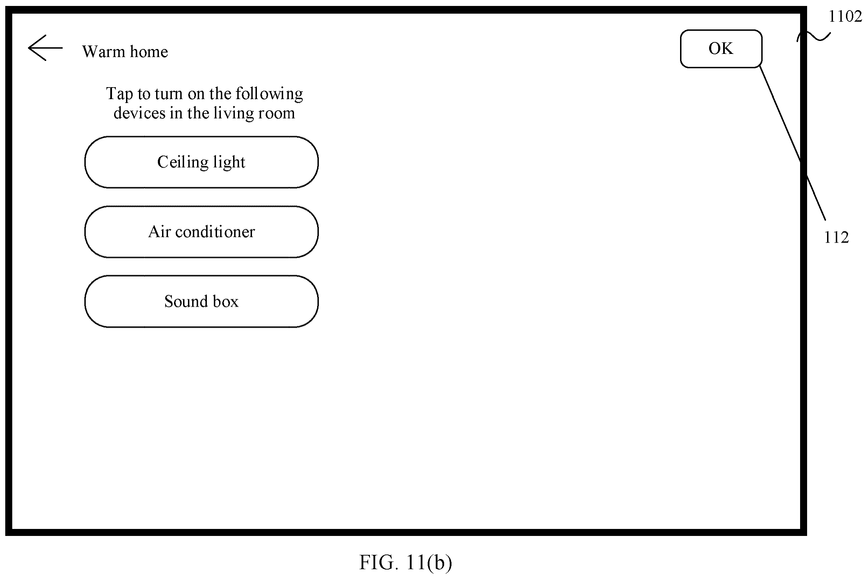

For example, on an interface 1101 shown in FIG. 11(a), in a process of receiving the to-be-configured scenario selected by the user, the smart control panel detects a touch-and-hold operation of the user on a warm home scenario card 111, and determines that the user needs to view details about a warm home scenario. In this case, the smart control panel may display an interface 1102 shown in FIG. 11(b). On the interface 1102, the smart control panel may display the details about the warm home scenario. For example, the warm home scenario includes turning on a ceiling light, an air conditioner, and a sound box in a living room after the smart switch is tapped. Optionally, on the interface 1102, the smart control panel may display identifiers, names, icons, nicknames, and the like of smart home devices corresponding to the to-be-configured scenario, so that the user distinguishes between the corresponding smart home devices. Then, if the smart control panel detects an operation performed by the user on an OK control 112, the smart control panel may redisplay the interface 1101 shown in FIG. 11(a), to receive an operation of selecting and viewing another to-be-configured scenario by the user.

In some embodiments, in the scenario configuration process, in response to a user operation, the smart control panel may display an editable interface of the to-be-configured scenario, so that the user edits the to-be-configured scenario.

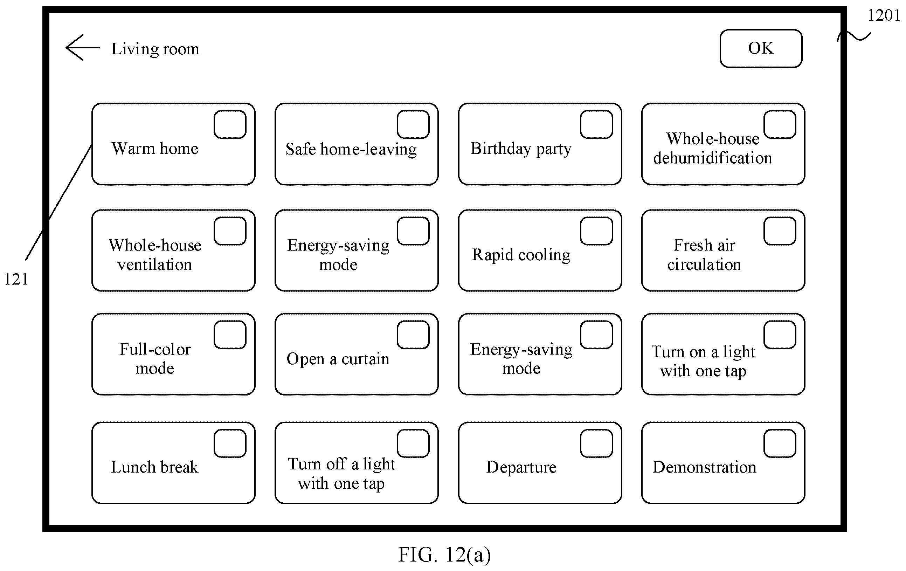

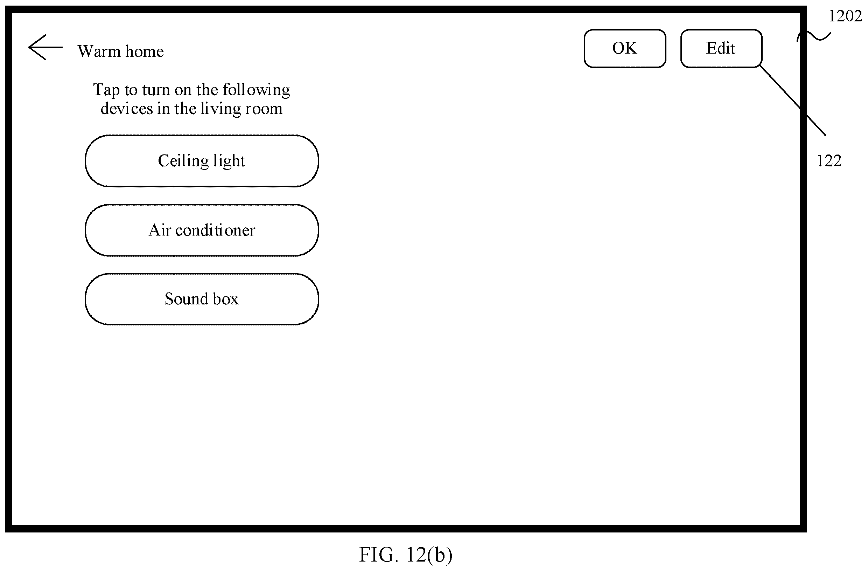

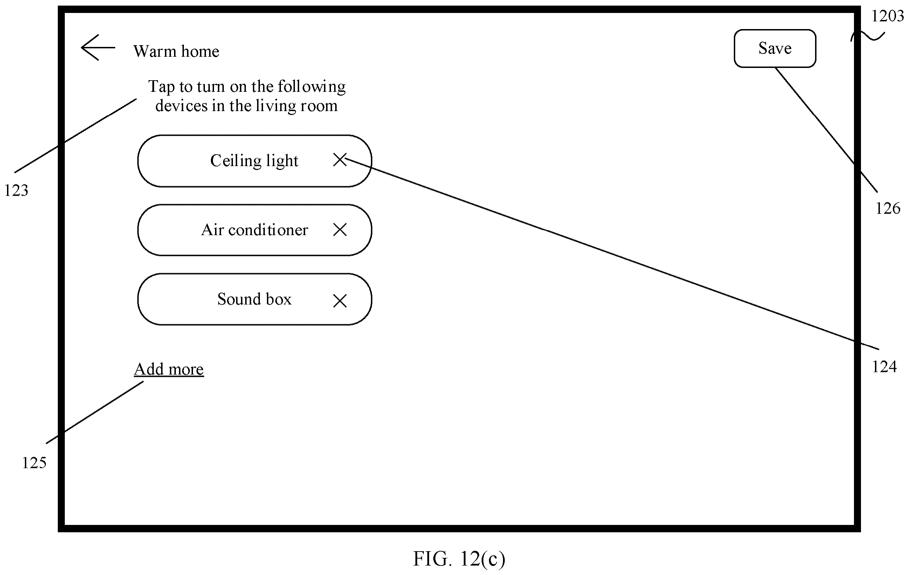

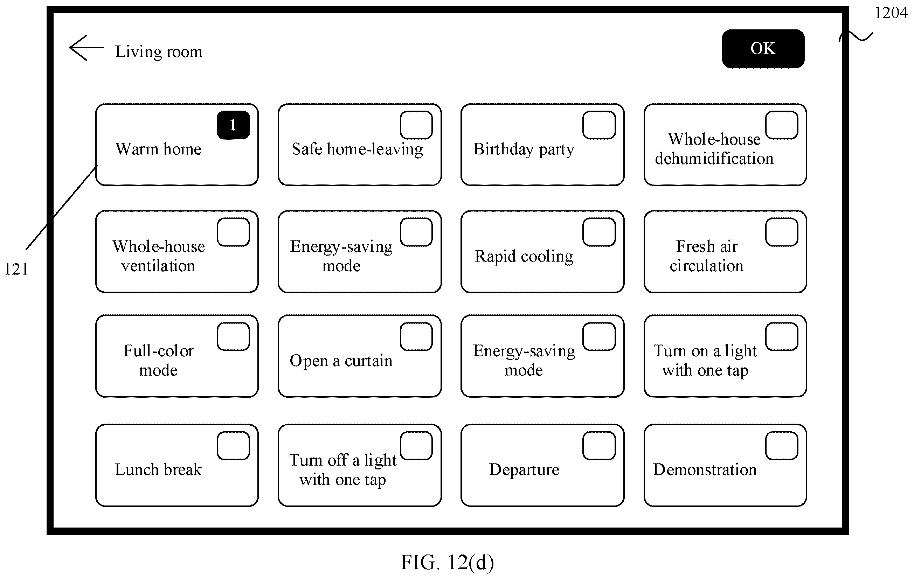

For example, on an interface 1201 shown in FIG. 12(a), in a process of receiving the to-be-configured scenario selected by the user, the smart control panel detects a touch-and-hold operation of the user on a warm home scenario card 121, and determines that the user needs to view details about a warm home scenario. In this case, the smart control panel may display an interface 1202 shown in FIG. 12(b). On the interface 1202, the smart control panel may display the details about the warm home scenario. Then, if the smart control panel detects an operation performed by the user on an editing control 122, the smart control panel determines that the user indicates to edit the warm home scenario, and may display an interface 1203 shown in FIG. 12(c), to receive an editing operation performed by the user on the to-be-configured scenario. For example, the smart control panel detects an operation performed by the user on a control 123, and a trigger condition corresponding to the warm home scenario can be edited. For another example, the smart control panel detects an operation performed by the user on a delete control 124, and an operable smart home device (for example, a ceiling light) corresponding to the warm home scenario may be deleted. In other words, the warm home scenario no longer includes an operation of tapping the smart switch to turn on the ceiling light. For another example, the smart control panel detects an operation performed by the user on a continue to add control 125, and may add a smart home device corresponding to the warm home scenario. Then, the smart control panel detects an operation performed by the user on a save control 126, may save the current scenario, and display an interface 1204 shown in FIG. 12(d). On the interface 1204, the smart control panel may display the scenario edited by the user in a selected state, for example, display the warm home scenario card 121 in the selected state.

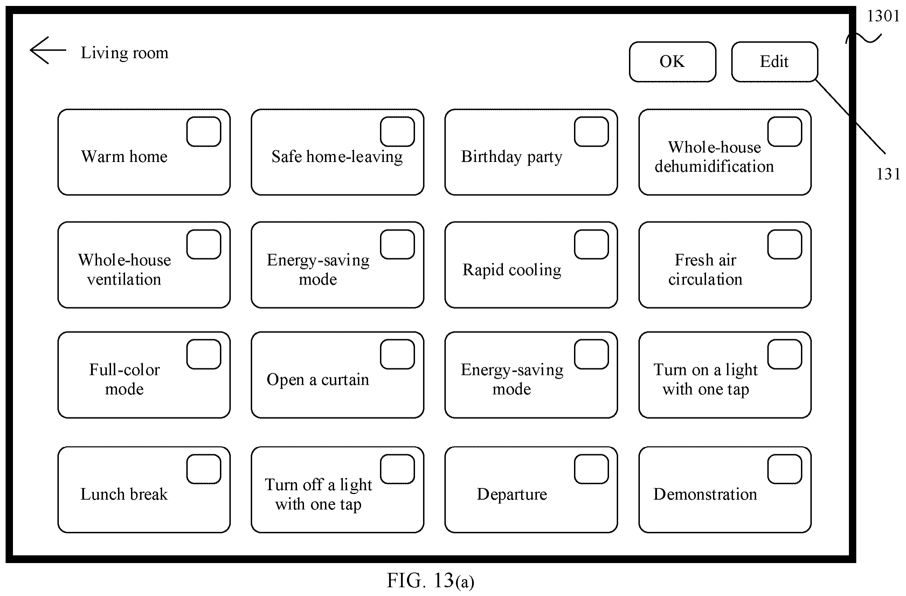

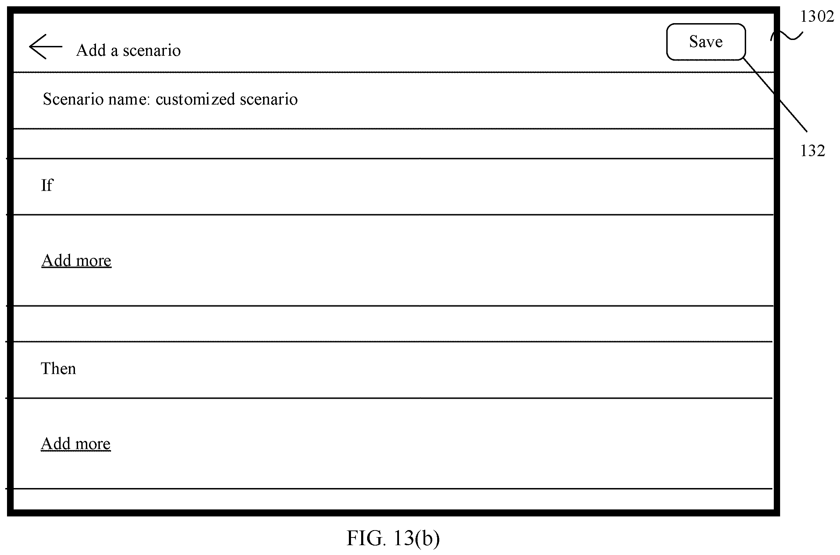

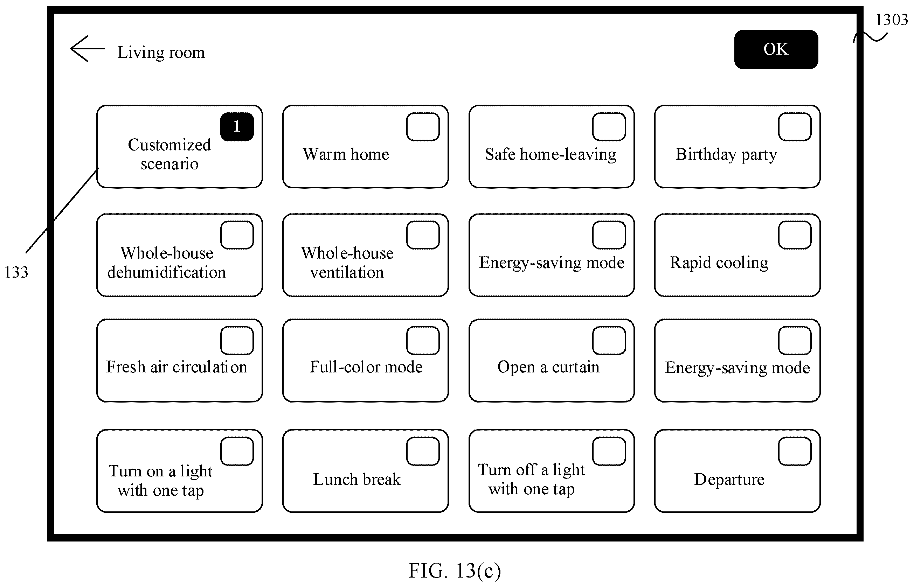

For another example, on an interface 1301 shown in FIG. 13(a), in the process of receiving the to-be-configured scenario selected by the user, the smart control panel may also receive an operation of adding a scenario or deleting a scenario by the user. For example, after detecting an operation performed by the user on an editing control 131, the smart control panel may display an interface 1302 shown in FIG. 13(b). The smart control panel may receive a scenario editing operation performed by the user on the interface 1302. Then, the smart control panel detects an operation performed by the user on a save control, may save the current scenario, and display an interface 1303 shown in FIG. 13(c). On the interface 1303, the smart control panel may display, in a selected state, a scenario newly added by the user, and display the scenario at a start location of the interface. For example, the smart control panel displays, at the start location of the interface, a customized scenario card 133 in the selected state, so that the user determines the customized to-be-configured scenario. For another example, the smart control panel detects an operation of touching and holding and moving a scenario card to an upper edge or a lower edge of the display by the user, and may determine that the user indicates to delete the scenario card. In this case, the smart control panel may delete a to-be-configured scenario corresponding to the scenario card.

In some embodiments, in response to a user operation, the smart control panel may display a scenario configuration status of the smart switch, so that the user learns of the scenario configuration status of the smart switch.

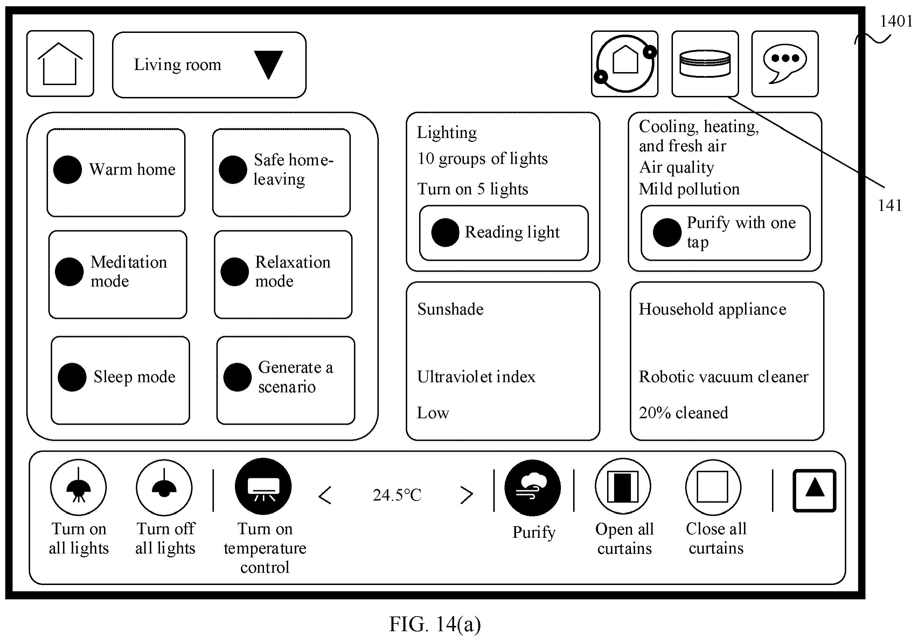

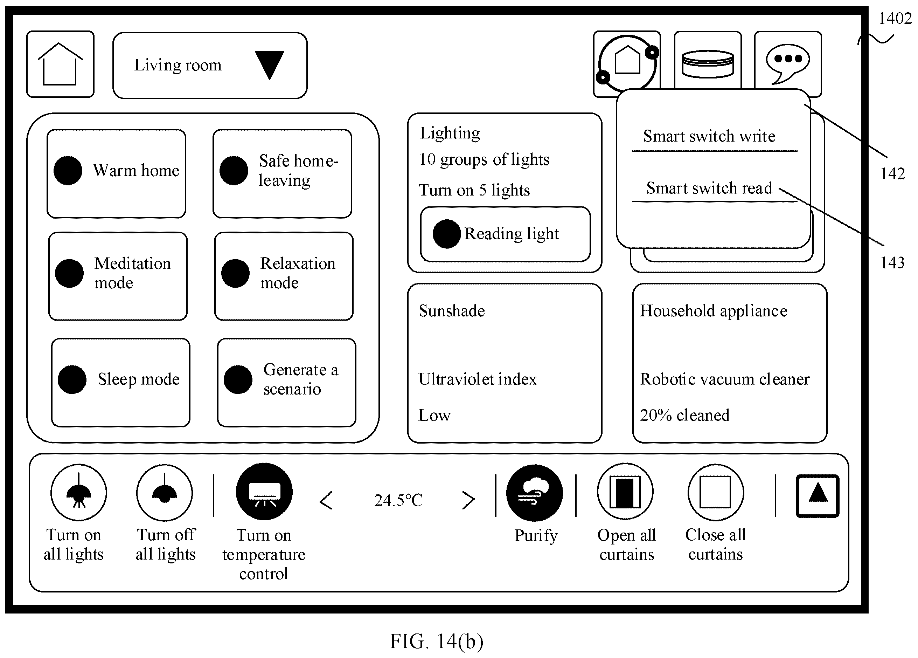

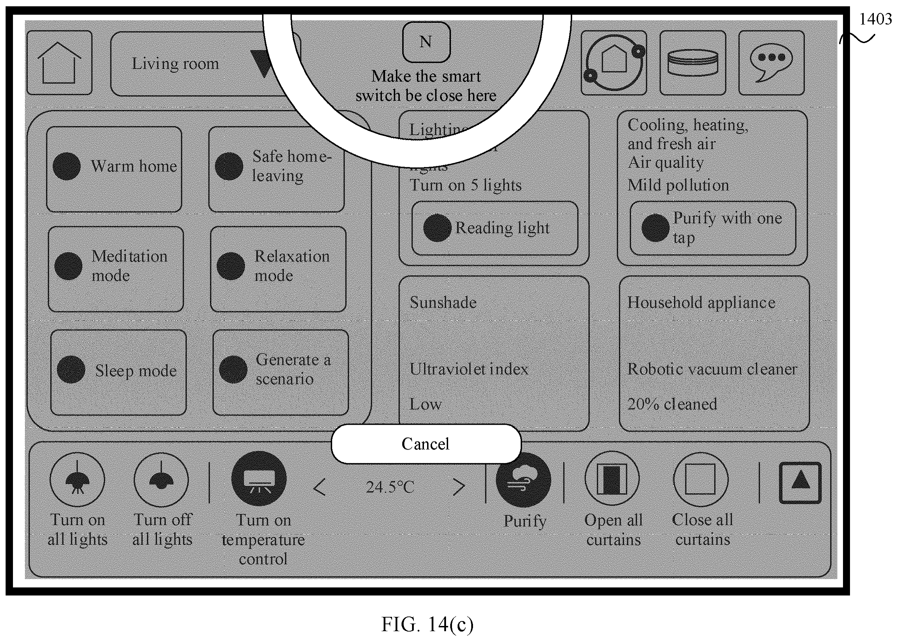

For example, on an interface 1401 shown in FIG. 14(a), the smart control panel detects an operation performed by the user on a control 141, determines that the user indicates to perform an operation on the smart switch, and the smart control panel may display an interface 1402 shown in FIG. 14(b). A menu bar 142 corresponding to the control 141 is displayed on the interface 1402. The smart control panel detects an operation performed by the user on a smart switch read control 143 displayed in the menu bar 142, and may determine that the user indicates to read details about the smart switch. In this case, the smart control panel may display an interface 1403 shown in FIG. 14(c), and the smart control panel may display prompt information on the interface 1403, to prompt the user to make the smart switch be close to the NFC sensing area of the smart control panel. Then, if the smart control panel detects the NFC "tap to connect" operation of the user, the smart control panel may read the NFC tag information of the smart switch, and determines, based on the device information in the NFC tag information, whether a scenario is configured for the smart switch and details about the configured scenario.

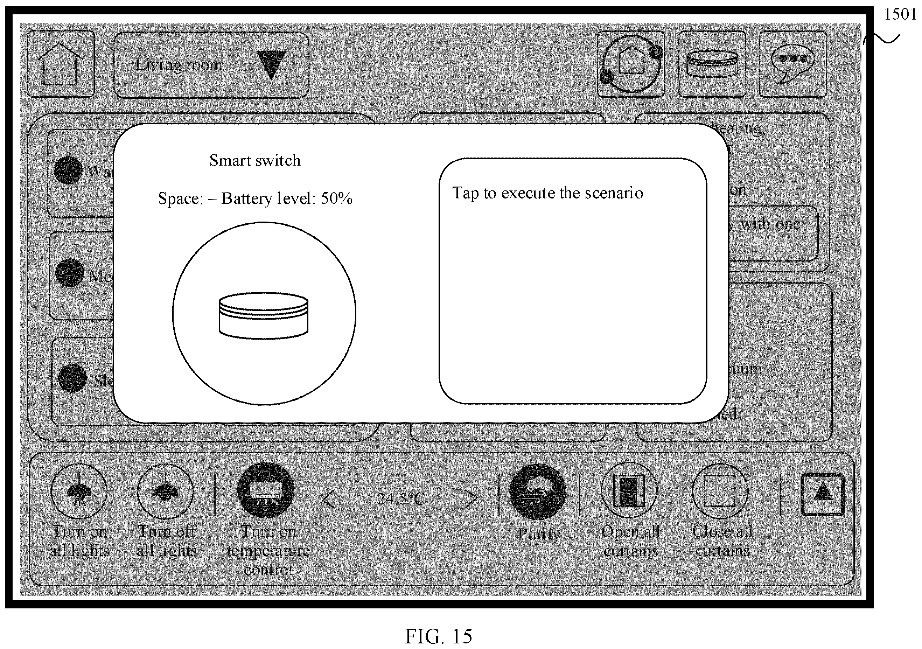

For example, in response to the NFC "tap to connect" operation of the user, the smart control panel determines that no scenario is configured for the smart switch. In this case, the smart control panel may display an interface 1501 shown in FIG. 15, and display details about the smart switch on the interface 1501, to prompt the user that the smart switch is a blank smart switch to which a scenario is to be written.

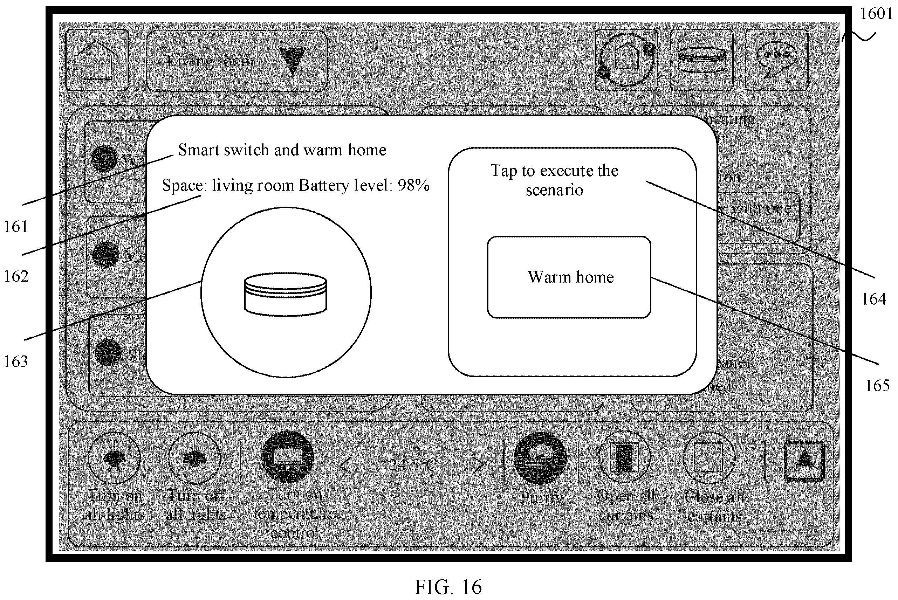

For another example, in response to the NFC "tap to connect" operation of the user, the smart control panel determines that a scenario is configured for the smart switch, and the scenario is a warm home scenario. In this case, the smart control panel may display an interface 1601 shown in FIG. 16, and display, on the interface 1601, details about the scenario configured for the smart switch. As shown by a reference numeral 161, the smart control panel may display a name of the smart switch and a name of the configured scenario. As shown by a reference numeral 162, the smart control panel may display space to which the scenario configured for the smart switch is applied and a battery level of the smart switch. As shown by a reference numeral 163, the smart control panel may display an icon of the smart switch. As shown by a reference numeral 164, the smart control panel may display a trigger condition of the scenario configured for the smart switch. As shown by a reference numeral 165, the smart control panel may display an identifier and a name of the scenario configured for the smart switch. It should be understood that more or less information may be displayed on the details interface, shown on the interface 1601, of the scenario configured for the smart switch. This is not limited in embodiments of this application.

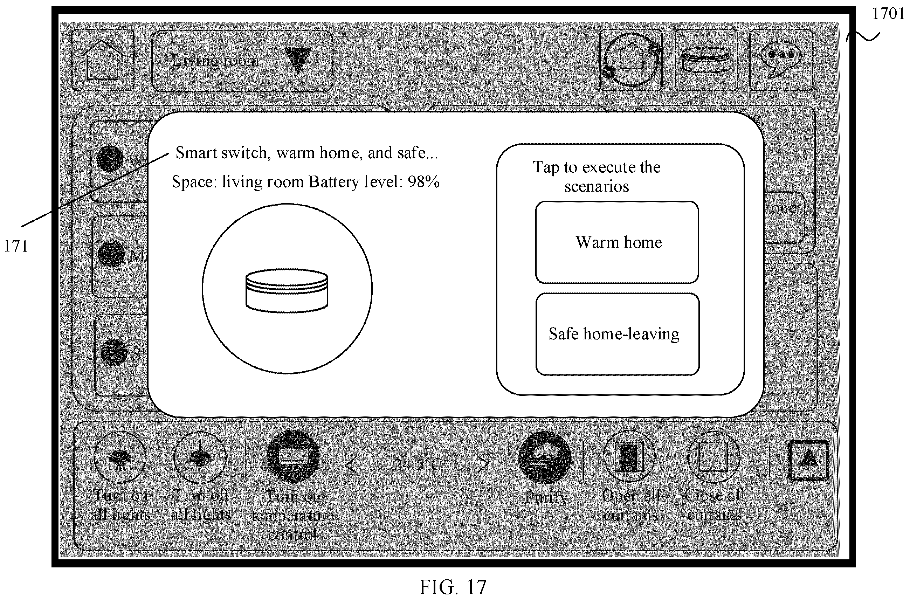

For another example, in response to the NFC "tap to connect" operation of the user, the smart control panel determines that two scenarios are configured for the smart switch, including a warm home scenario and a safe home scenario. In this case, the smart control panel may display an interface 1701 shown in FIG. 17, and display, on the interface 1701, details about the scenario configured for the smart switch. As shown by a reference numeral 171, the smart control panel may display a name of the smart switch and a name of the configured scenario. If the name of the scenario is excessively long, and the current display area is insufficient to display all of the name of the scenario, the smart control panel may use "...." to indicate that the name of the scenario is not completely displayed.

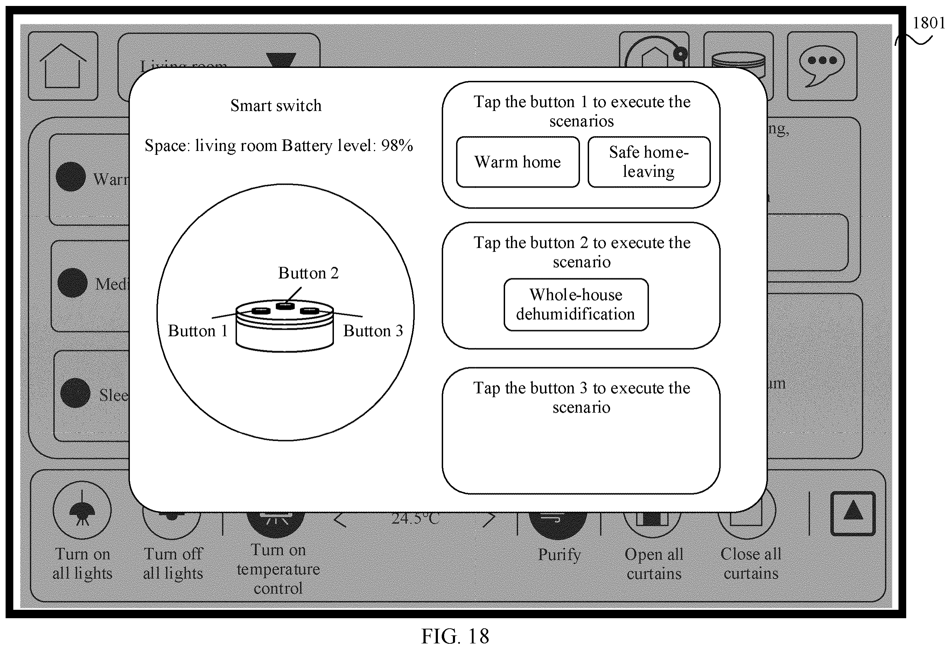

For another example, in response to the NFC "tap to connect" operation of the user, the smart control panel determines that the smart switch includes a plurality of buttons, and may determine a scenario configuration status of each button. In this case, the smart control panel may display an interface 1801 shown in FIG. 18, and display, on the interface 1801, details about the scenario configured for each button of the smart switch. For example, the smart switch includes a button 1, a button 2, and a button 3. A scenario configured for the button 1 is a warm home scenario and a safe home-leaving scenario, a scenario configured for the button 2 is a whole-house dehumidification scenario, and no scenario is configured for the button 3.

In some embodiments, in a process of displaying scenario configuration details about the smart switch, the smart control panel may display a battery level of the smart switch. If a remaining battery level of the smart switch is less than a preset battery level threshold, a low battery prompt may be displayed, to avoid a problem that the scenario of the smart switch fails to be triggered due to low battery.

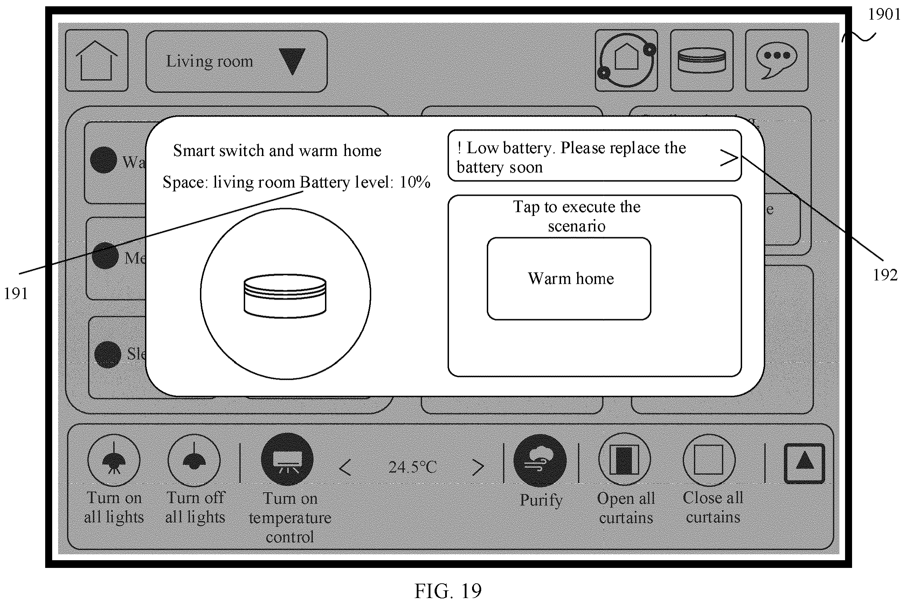

For example, on an interface 1901 shown in FIG. 19, the smart control panel displays the scenario configuration details about the smart switch. As shown by a reference numeral 191, the remaining battery level of the smart switch is 10%, which is lower than the preset battery level threshold, and a low battery prompt 192 may be displayed. Optionally, if the smart control panel detects an operation performed by the user on the low battery prompt 192, the smart control panel may display a battery replacement guide or a charging guide of the smart switch, to help the user replace the battery of the smart switch or charge the smart switch, so that the smart switch subsequently performs a corresponding scenario.

In some embodiments, in the process of displaying the scenario configuration details about the smart switch, in response to a user operation, the smart control panel may also edit the scenario of the smart switch.

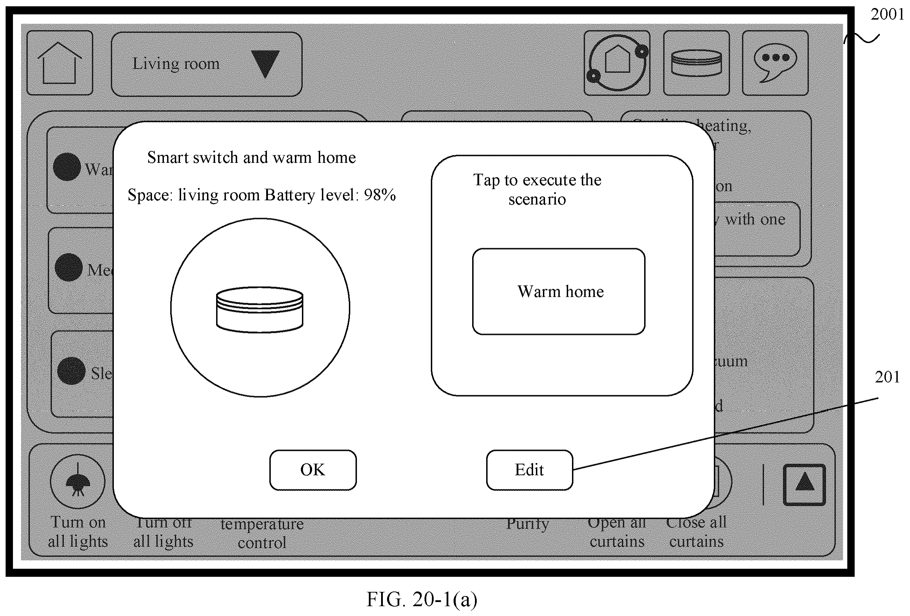

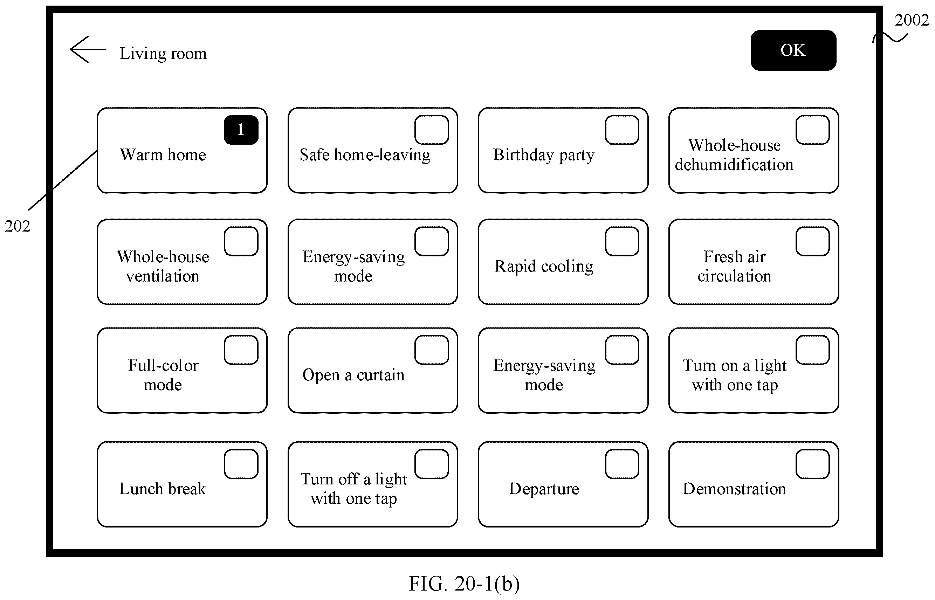

For example, in the process of displaying the interface 1403 shown in FIG. 14(c), the smart control panel detects the NFC "tap to connect" operation of the user, may read the NFC tag information of the smart switch, and determines the scenario configuration details about the smart switch, to display an interface 2001 shown in FIG. 20-1(a). Then, the smart control panel detects an operation (for example, an operation on an editing control 201 or an operation on a warm home scenario card) performed by the user to indicate to edit the scenario of the smart switch, and may display an interface 2002 shown in FIG. 20-1(b). On the interface 2002, the smart control panel may display the scenario currently configured for the smart switch. For example, as shown on the interface 2001, a warm home scenario is configured for the smart switch, and the smart control panel may display, on the interface 2002, the warm home scenario card in a selected state. In addition, on the interface 2002, the smart control panel may receive a scenario editing operation performed by the user on the smart switch. For a plurality of implementations of the scenario editing operation performed by the user on the smart switch, refer to the content in the foregoing corresponding embodiment. Details are not described herein again.

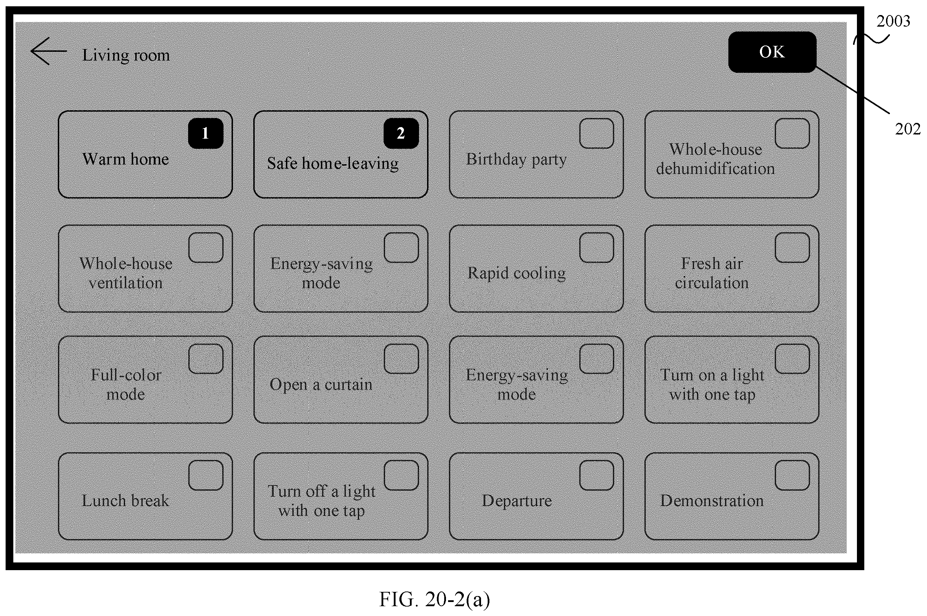

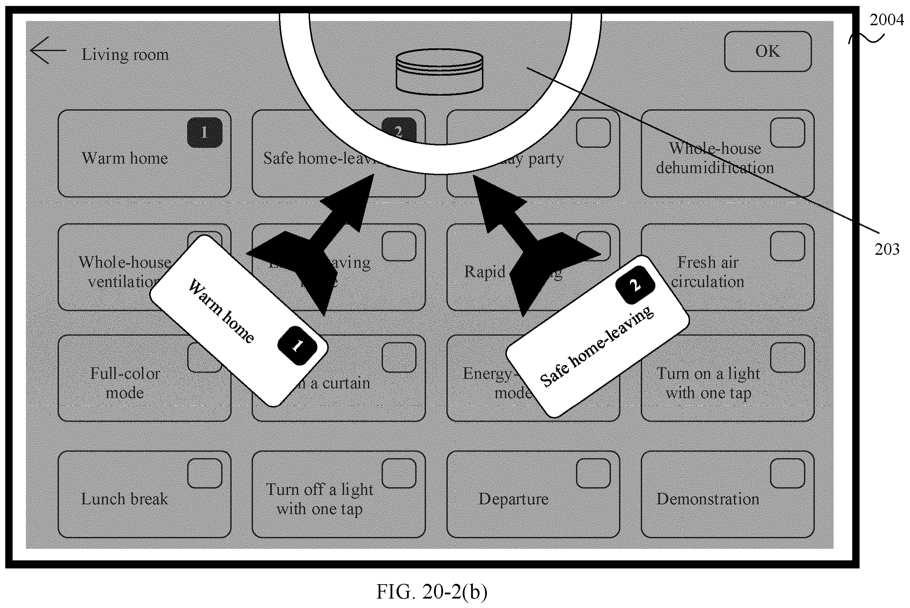

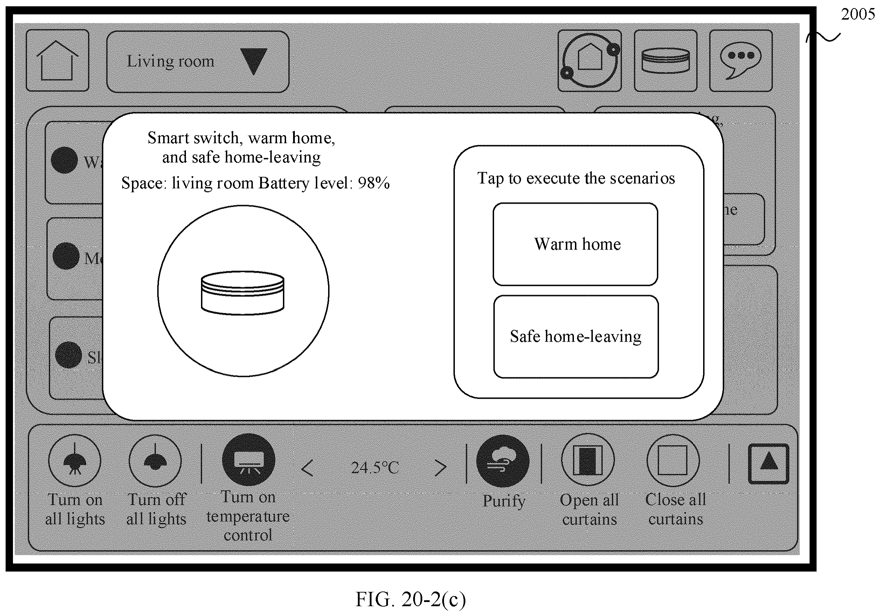

For example, on an interface 2003 shown in FIG. 20-2(a), the smart control panel detects an operation performed by the user on an OK control 202, and determines that the to-be-configured scenario selected by the user includes a warm home scenario and a safe home-leaving scenario. In this case, the smart control panel may display an interface 2004 shown in FIG. 20-2(b), and display scenario writing animation effects of the warm home scenario and the safe home-leaving scenario on the interface 2004. Optionally, if the warm home scenario is configured in the smart switch, the smart control panel may display, on the interface 2004, only the scenario writing animation effect of the safe home-leaving scenario that is not configured; or display the scenario writing animation effects of the warm home scenario and the safe home-leaving scenario, but does not repeatedly write the warm home scenario. Then, the smart control panel may display an interface 2005 shown in FIG. 20-2(c), and display, on the interface 2005, details about the scenario configured for the smart switch after the scenario is edited. For example, the scenario configured for the smart switch includes the warm home scenario and the safe home-leaving scenario.

In some embodiments, the smart control panel detects the NFC "tap to connect" operation of the user, and may also directly trigger writing into the smart switch or reading from the smart switch. In this way, user operations are further reduced, and the user operation difficulty is reduced.

For example, in the process of displaying the interface 501 shown in FIG. 5(a), when detecting the NFC "tap to connect" operation of the user, the smart control panel may determine to trigger writing into the smart switch or reading from the smart switch corresponding to space of the current interface. Optionally, in an implementation of triggering writing into the smart switch, in response to the NFC "tap to connect" operation of the user, the smart control panel may first display a room selection interface, to prompt the user to select space of a to-be-configured scenario of the smart switch. Then, the smart control panel displays a scenario card selection interface corresponding to the space selected by the user, so that the user selects the to-be-configured scenario of the smart switch in the current space. In this way, the user may trigger scenario configuration of the smart switch on any interface of the smart control panel, and does not need to first select, on the smart control panel, an interface corresponding to space to which the smart switch needs to be added, and then perform the NFC "tap to connect" operation, to further simplify the user operation.

If the smart control panel determines that the smart switch is a blank smart switch into which no scenario is written. In this case, the smart control panel may display the interface 503 shown in FIG. 5(c), to receive the scenario editing operation of the user.

Alternatively, the smart control panel determines that a scenario is written into the smart switch. In this case, the smart control panel may display a scenario configuration details interface of the smart switch, for example, any scenario configuration details interface in FIG. 16 to FIG. 19.

Alternatively, the smart control panel directly displays the interface 2001 shown in FIG. 20-1(a), and the smart control panel provides the editing control 201 on the interface. The user may add a scenario to the blank smart switch through the editing control 201, or may edit a scenario of a smart switch in which a scenario is configured.

In some embodiments, different users may configure a same smart switch for different scenarios. For example, the smart switch has a fingerprint recognition function, and the smart switch may determine an identity of a current user by using the fingerprint recognition function, and then determine, by using a local capability or through collaboration with another device, to configure a scenario of the smart switch corresponding to the user identity or read a scenario of the smart switch corresponding to the user identity. In this way, different users may implement different scenarios of the smart switch by using the same smart switch. This further improves user experience.

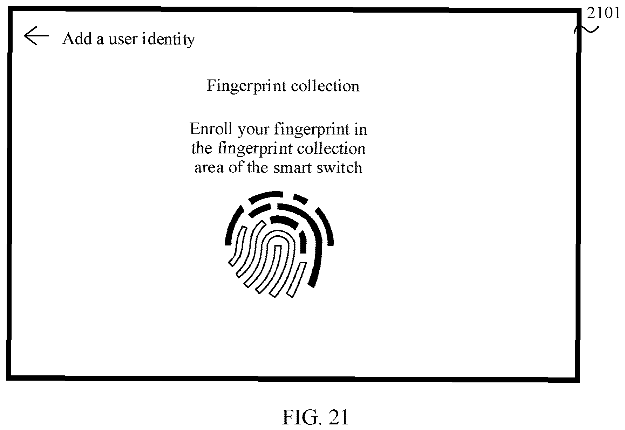

For example, on the interface 803 shown in FIG. 8(c), in the process of writing the scenario into the smart switch, the smart control panel may display an interface 2101 shown in FIG. 21, to prompt the user to perform fingerprint enrollment. In this process, the user may enroll a fingerprint by using the smart switch, and the smart switch may send a collected fingerprint to the smart control panel. In this case, the smart control panel may establish a correspondence between the obtained user fingerprint, the smart switch, and the to-be-configured scenario. Therefore, in a subsequent process in which a user operates the smart switch, the smart switch may send a collected fingerprint to the smart control panel (or the whole-house hub), and the smart control panel may determine, based on the smart switch and the user fingerprint, a triggered scenario.

For another example, in the process of displaying the interface 1403 shown in FIG. 14(c) (namely, in the process of reading the scenario of the smart switch), the smart control panel detects the NFC "tap to connect" operation of the user, and may display the interface 2101 shown in FIG. 21, to prompt the user to perform fingerprint enrollment. In this process, the user may enroll a fingerprint by using the smart switch, and the smart switch may send a collected fingerprint to the smart control panel. In this case, the smart control panel determines a scenario corresponding to the user fingerprint in the smart switch, to display a details interface of the scenario.

It should be understood that the smart control panel may alternatively determine the user identity in another manner. This is not limited in embodiments of this application. For example, the smart control panel determines the user identity by using a camera on the smart switch or in the smart home system. For another example, the smart control panel determines the user identity by using another smart home device that is in the smart home system and in which a user identity identification function is configured.

In some embodiments, after completing configuration of the smart switch, the smart control panel may send information such as the device information of the smart switch, the configured scenario information, and the user identity information to the whole-house hub, and the whole-house hub manages the scenario of the smart switch. In this way, after subsequently detecting a user operation, the smart switch may send a signal to the whole-house hub, and the whole-house hub may determine a triggered scenario based on device information carried in the signal.

The foregoing describes the scenario configuration process of the smart switch, and the following describes a registration process of the smart switch in detail.

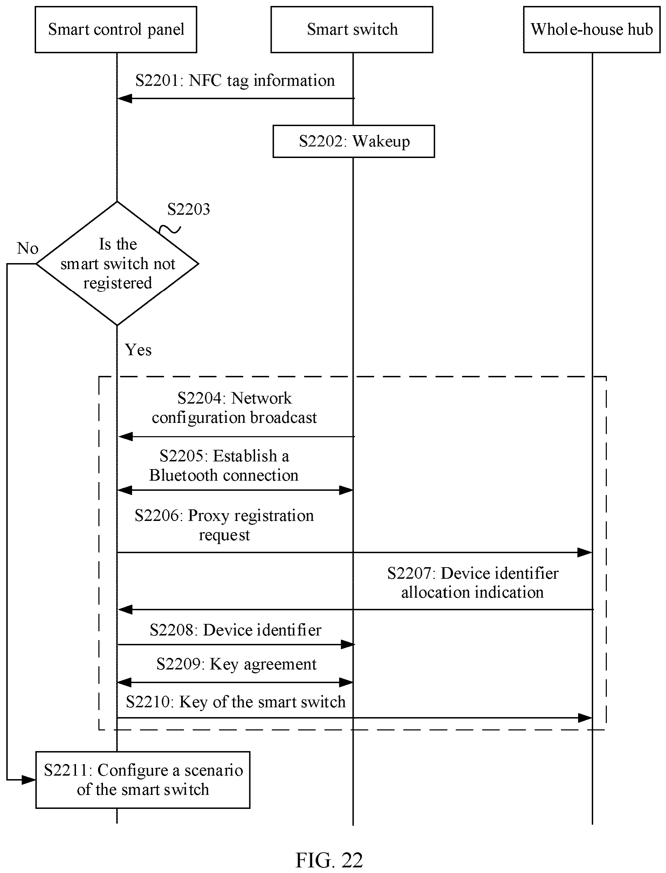

For example, FIG. 22 is a diagram of a registration procedure of a smart switch according to an embodiment of this application. As shown in FIG. 22, the procedure includes the following steps.

S2201: A smart control panel obtains NFC tag information of the smart switch.

The NFC tag information includes device information of the smart switch, for example, information such as a device model, a device name, button information, and a signal type of the smart switch.

For example, in the scenario shown in FIG. 8(a) to FIG. 8(c), in a process of writing a to-be-configured scenario, the smart control panel detects an NFC "tap to connect" operation of a user, and may obtain the NFC tag information of the smart switch.

S2202: Wake up the smart switch.

In some embodiments, in response to the NFC "tap to connect" operation of the user, the smart switch may be directly woken up.

It should be noted that an execution sequence of step S2201 and step S2202 is not limited in this embodiment of this application. In response to the same NFC "tap to connect" operation, the smart control panel obtains the NFC tag information of the smart switch, and the smart switch is woken up.

S2203: The smart control panel determines whether the smart switch is not registered. If the smart switch is not registered, step S2204 may be performed; or if the smart switch is registered, step S2211 may be performed.

In some embodiments, the smart control panel may determine, based on the device information in the NFC tag information, whether the smart switch is registered, for example, determine whether the smart switch is bound to a scenario corresponding to the device information. If the smart control panel determines, based on the NFC tag information, that the smart switch is not registered, the smart control panel may perform step S2211 after the smart switch is registered by performing step S2204 to step S22010. If the smart control panel determines, based on the NFC tag information, that the smart switch is registered, the smart control panel may directly perform step S2211.

S2204: The smart switch sends a network configuration broadcast to the smart control panel.

In some embodiments, after detecting the NFC "tap to connect" operation of the user, the smart switch may alternatively trigger obtaining of registration information locally or from another device. If the smart switch determines that the smart switch is not registered, the smart switch may send the network configuration broadcast, to trigger the registration procedure. If the smart switch determines that the smart switch is registered, the smart switch may no longer send the network configuration broadcast. In other words, the smart switch may also perform step S2203.

Correspondingly, after determining that the smart switch is not registered, the smart control panel may receive the network configuration broadcast sent by the smart switch, to trigger the registration procedure of the smart switch. Alternatively, after determining that the smart switch is registered, the smart control panel may no longer receive the network configuration broadcast sent by the smart switch.

Optionally, the smart control panel may not determine whether the smart switch is registered (that is, step S2203 is not performed), but triggers the registration procedure of the smart switch after receiving the network configuration broadcast sent by the smart switch. If the smart control panel does not receive, within preset time after the NFC tag information is obtained, the network configuration broadcast sent by the smart switch, the smart control panel may directly trigger to perform step S2211, that is, consider by default that the smart switch is registered. Alternatively, the smart control panel receives indication information sent by the smart switch, and determines a registration status of the smart switch based on the indication information.

S2205: The smart control panel establishes a Bluetooth connection to the smart switch.

In some embodiments, after receiving the network configuration broadcast sent by the smart switch, the smart control panel may exchange information with the smart switch, to establish the Bluetooth connection. For example, the smart control panel and the smart switch establish a Bluetooth low energy (BLE) connection based on a generic attribute (generic attribute, GATT) protocol.

For a detailed procedure of the Bluetooth establishment process, refer to the conventional technology. This is not limited in embodiments of this application.

S2206: The smart control panel sends a proxy registration request to a whole-house hub.

In some embodiments, after determining that the Bluetooth connection to the smart switch is established, the smart control panel may send the proxy registration request to the whole-house hub, to perform registration as a proxy for the smart switch. Correspondingly, the whole-house hub receives the proxy registration request sent by the smart control panel.

Optionally, the proxy registration request carries the device information of the smart switch.

S2207: The whole-house hub sends a device identifier allocation indication to the smart control panel.

In some embodiments, the whole-house hub registers the smart switch based on the proxy registration request, allocates a device identifier in a current smart home system to the smart switch, and generates the device identifier allocation indication. Then, the whole-house hub sends the device identifier allocation indication to the smart control panel, where the device identifier allocation indication carries the device identifier allocated to the smart switch. Correspondingly, the smart control panel receives the device identifier allocation indication sent by the whole-house hub.

Optionally, the device identifier of the smart switch is used by the whole-house hub or the smart home control panel to determine, in a subsequent smart home device control process, that a device that sends a communication message is the smart switch.

S2208: The smart control panel sends the device identifier to the smart switch.

In some embodiments, when receiving the device identifier allocation indication, the smart control panel obtains the device identifier carried in the device identifier allocation indication. Then, the smart control panel sends the device identifier to the smart switch. Correspondingly, the smart switch receives the device identifier sent by the smart control panel.

S2209: The smart control panel performs key agreement with the smart switch.

In some embodiments, after receiving the device identifier, the smart switch may trigger a key agreement procedure with the smart control panel, to obtain a key of the smart switch.

Optionally, the key of the smart switch is used to encrypt a communication message in a subsequent communication process between the smart switch and another device, to ensure communication security.

S2210: The smart control panel sends the key of the smart switch to the whole-house hub.

In some embodiments, after completing key agreement with the smart switch, the smart control panel may send the determined key of the smart switch to the whole-house hub, to complete registration for the smart switch. Correspondingly, the whole-house hub may receive the key of the smart switch sent by the smart control panel. In this case, in a subsequent process of communication between the whole-house hub and the smart switch, security of the communication message can be ensured based on the key of the smart switch. For example, the key of the smart switch is used to encrypt or decrypt the communication message, prevent the communication message from being tampered with, prevent replay, and perform identity validity check.

In some embodiments, in a scenario trigger process, the smart switch may send a signal to at least one of the smart control panel, a Bluetooth gateway, the whole-house hub, and a smart home device corresponding to a scenario, to trigger the scenario. Correspondingly, after determining that registration for the smart switch is completed, the smart control panel may send the registration information to the corresponding device, so that after receiving the signal in the scenario trigger process subsequently, the corresponding device may determine that the smart switch is registered and is a device in the current smart home system, and may trigger a corresponding scenario.

In some embodiments, in the registration procedure of the smart switch described in step S2204 to step S2210, the smart control panel may communicate with another device through the Bluetooth gateway, to complete registration for the smart switch.

For example, after obtaining the NFC tag information of the smart switch, the smart control panel may send, to the Bluetooth gateway, the device information included in the NFC tag information. Then, the Bluetooth gateway may determine, based on the device information, to receive the network configuration broadcast sent by the smart switch. Then, the Bluetooth gateway may establish the Bluetooth connection to the smart switch, and send indication information to the smart control panel. The indication information indicates that the Bluetooth gateway establishes the Bluetooth connection to the smart switch. Then, the smart control panel sends the proxy registration request to the whole-house hub through the Bluetooth gateway, and obtains, through the Bluetooth gateway, the device identifier allocation indication sent by the whole-house hub. Then, the smart control panel sends the device identifier to the smart switch through the Bluetooth gateway, and performs key agreement with the smart switch through the Bluetooth gateway. Then, the smart control panel sends the agreed key to the whole-house hub through the Bluetooth gateway. For a specific implementation of each process, refer to detailed content of the registration procedure of the smart switch in step S2204 to step S2210. Details are not described herein again. In some embodiments, in the registration procedure of the smart switch described in step S2204 to step S2210, in the process of performing registration as the proxy for the smart switch, the smart control panel may determine information of a currently logged-in account, and may further register the smart switch with the corresponding account information.

S2211: The smart control panel configures a scenario of the smart switch.

In some embodiments, after determining that the smart switch is registered, the smart control panel may perform scenario configuration of the smart switch.

For example, on the interface 803 shown in FIG. 8(c), in the process of displaying the scenario writing animation effect, the smart control panel determines the registration status of the smart switch. If the smart switch is not registered, registration for the smart switch is completed by performing step S2204 to step S2210. Then, after it is determined that the smart switch is registered, scenario writing starts to be performed.

In this way, the user can complete registration for the smart switch through the simple "tap to connect" operation. Compared with the conventional technology in which the user needs to perform a plurality of operations on the smart control panel and the smart switch to complete registration for the smart switch, this effectively simplifies the registration procedure of the smart switch, reduces user operation difficulty, and improves user experience.

It should be understood that, in the foregoing embodiments, the NFC "tap to connect" operation is used as an example to describe the registration procedure and the scenario configuration procedure of the smart switch. The smart control panel may further use another near field communication technology or electronic tag to simplify the registration procedure and the scenario configuration procedure of the smart switch.

For example, the smart control panel establishes a Bluetooth connection or a Wi-Fi connection to the smart switch by using a proximity detection function of Bluetooth or Wi-Fi, and completes registration for and scenario configuration of the smart switch based on the Bluetooth connection or the Wi-Fi connection. This can also simplify the user operation. Alternatively, the smart control panel obtains the device information of the smart switch by scanning a QR code preset in the smart switch, and completes registration for and scenario configuration of the smart switch. This can also simplify the user operation.

It should be further understood that, in the foregoing embodiments, an example in which the user triggers the registration procedure and the scenario configuration procedure through the "tap to connect" operation is used. Optionally, another user operation manner may alternatively be defined to trigger the procedure, for example, "getting-close" or "shake". When some other user operation manners are used, the interface of the smart control panel may not present the icon of the smart switch indicated by the reference numeral 84 shown in FIG. 8(c) and the semicircular area matching the icon of the smart switch, or present a visual presentation area or control in another suitable form.

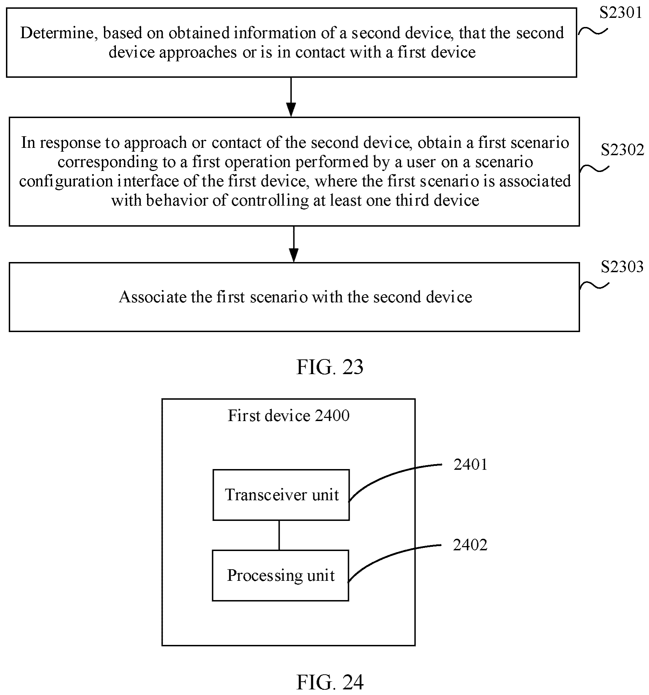

Optionally, FIG. 23 is a schematic flowchart of a configuration method according to an embodiment of this application. As shown in FIG. 23, the method includes the following steps.

S2301: A first device determines, based on obtained information of a second device, that the second device approaches or is in contact with the first device.

Optionally, the first device is, for example, a smart control panel, and the second device is, for example, a smart switch.

Optionally, the first device may obtain the information of the second device based on a near field communication technology. For example, the information of the second device is, for example, NFC tag information. In response to a "tap to connect" operation, the first device may obtain the NFC tag information of the second device. The contact of the second device with the first device may be short-time contact within preset time, or long-time contact exceeding preset time. For another example, the information of the second device includes a Bluetooth signal, a Wi-Fi signal, or the like of the second device. The first device may determine, based on a strength change of the Bluetooth signal or the Wi-Fi signal of the second device, whether the second device approaches the first device.

For example, on the interface 802 shown in FIG. 8(b), the first device (for example, the smart control panel) detects that the second device (for example, the smart switch) is in contact with an NFC sensing area, and may obtain the NFC tag information of the second device.

S2302: In response to approach or contact of the second device, the first device obtains a first scenario corresponding to a first operation performed by a user on a scenario configuration interface of the first device, where the first scenario is associated with behavior of controlling at least one third device.

The first operation may be an operation performed by the user on the scenario configuration interface, or may be a series of operations performed by the user on the scenario configuration interface. Optionally, the third device is, for example, a smart home device.

In some embodiments, the first device displays the scenario configuration interface, where the scenario configuration interface is used to display a scenario card. In response to the first operation performed by the user on the scenario configuration interface, the first device determines the first scenario that is selected by the user and that corresponds to a first scenario card.

Optionally, the scenario card may alternatively be described as a scenario component, a scenario control, or the like. This is not limited in embodiments of this application.

Optionally, a scenario configuration component is displayed on a first interface, the first interface is used to configure a device in first space, and a scenario corresponding to the first scenario card is a scenario that can be configured for the second device in the first space. In this way, different scenarios can be configured for the second device in different space. This enriches use of the user.

For example, the interface 601 shown in FIG. 6(a) is the scenario configuration interface, and the first device displays the plurality of scenario cards corresponding to the plurality of scenarios that can be configured for the second device in the living room space (for example, the first space). Then, the first device detects an operation performed by the user on the warm home scenario card 62, determines that the user chooses to add the warm home scenario, and the first device displays the interface 602 shown in FIG. 6(b). Then, the first device detects an operation performed by the user on the safe home-leaving scenario card 63, determines that the user chooses to add the safe home-leaving scenario, and the first device displays the interface 603 shown in FIG. 6(c). Then, the first device detects an operation performed by the user on the OK control 61, and may determine that the user completes selection of the scenario card. For example, the first scenario card includes the warm home scenario card and the safe home-leaving scenario card, and the first scenario includes the warm home scenario and the safe home-leaving scenario.

In this way, the scenario is pre-configured, and the user can complete scenario configuration of the second device through a simple selection operation. This effectively reduces scenario configuration difficulty.

In some examples, in response to an operation performed by the user on the scenario configuration component, the first device may display the scenario configuration interface; in response to the approach or the contact of the second device, display the scenario configuration interface. In other words, the user may show, by selecting the control on a display interface of the first device, the intent that the scenario configuration interface needs to be opened, to configure the scenario of the second device. Alternatively, the first device may determine, based on the approach or the contact of the second device, that the user has the intent of configuring the scenario of the second device, and then automatically pop up the scenario configuration interface. Optionally, when the second device approaches or is in contact with the first device, the first device may further obtain a scenario writing status of the second device locally or from the second device or another device, and pop up different association interfaces based on different scenario writing statuses. For example, when it is determined that a scenario is written into the second device, a scenario details interface is popped up. When it is determined that no scenario is written into the second device, the scenario configuration interface is popped up.

For example, on the interface 501 shown in FIG. 5(a), the first device detects an operation performed by the user on the control 51, determines that the user indicates to perform an operation on the second device, and the first device may display the interface 502 shown in FIG. 5(b). The menu bar 52 corresponding to the control 51 is displayed on the interface 502. The first device detects an operation performed by the user on the smart switch write control 53 in the menu bar 52, and the first device may display the interface 503 shown in FIG. 5(c). The interface 503 is the scenario configuration interface. Then, in response to the approach or the contact of the second device, the first device may write, into the second device, a scenario selected by the user on the scenario configuration interface.

For another example, in response to an operation through which the user indicates to write the second device (for example, the operation performed on the smart switch write control 53 on the interface 502 shown in FIG. 5(b)), the first device may alternatively first display prompt information, to prompt the user to make the second device be close to the NFC sensing area of the first device. Then, after obtaining the information of the second device in response to the approach or the contact of the second device, the first device displays the scenario configuration interface, and receives an operation of selecting a to-be-configured scenario by the user.

In some examples, a number is displayed on the first scenario card, the number indicates a ranking in which the user selects the scenario card, and the ranking matches a scenario writing ranking in which the first scenario is associated with the second device.

In some examples, a scenario configuration quantity threshold (for example, a first threshold) of the second device is preset in the first device, and the scenario configuration quantity threshold indicates a maximum quantity of scenarios that can be configured for the second device. For example, if the scenario configuration quantity threshold is 2, the second device determines that a maximum of two scenarios can be configured for the second device. Correspondingly, a quantity of first scenario cards that can be selected by the user on the scenario configuration interface is less than or equal to the first threshold.

For example, on the interface 603 shown in FIG. 6(c), the first device displays the number 1 on the currently selected warm home scenario card 62. Then, the first device detects an operation performed by the user on the safe home-leaving scenario card 63, and determines that the user chooses to add the safe home-leaving scenario. Then, the first device displays the safe home-leaving scenario card 63 in the selected state, and displays the number 2 on the safe home-leaving scenario card 63, to indicate that the quantity of to-be-configured scenarios currently selected by the user is 2. In addition, the scenario configuration sequence is first configuring the warm home scenario and then configuring the safe home-leaving scenario.

In some embodiments, in response to an operation performed by the user on a second scenario card in the scenario card, scenario information of a second scenario corresponding to the second scenario card is displayed.

For example, on the interface 1201 shown in FIG. 12(a), in a process of displaying the scenario configuration interface, the first device detects a touch-and-hold operation of the user on the warm home scenario card 121, and determines that the user needs to view the details about the warm home scenario. In this case, the first device may display the interface 1202 shown in FIG. 12(b). On the interface 1202, the first device may display the details about the warm home scenario.

In this way, in the scenario configuration process, in response to the user operation, the first device may display details about the scenario, so that the user learns of an application status of the scenario, to determine whether the scenario needs to be selected.

In some embodiments, in response to a second operation performed by the user on the scenario configuration interface, the first device edits the first scenario corresponding to the first scenario card.

For example, on the interface 1202 shown in FIG. 12(b), the first device detects an operation performed by the user on the editing control 122, determines that the user indicates to edit the warm home scenario, and may display the interface 1203 shown in FIG. 12(c), to receive an editing operation performed by the user on the to-be-configured scenario.

In this way, in the scenario configuration process, in response to the user operation, the first device may edit the scenario, so that the edited scenario better meets a use requirement of the user.

S2303: The first device associates the first scenario with the second device.

In some embodiments, the first device locally stores or sends, to a server, a device identifier of the second device and device control information corresponding to the device identifier of the second device; or locally stores or sends, to a server, a device identifier of the second device and a scenario identifier of the first scenario associated with the second device.

Optionally, the server is, for example, a whole-house hub.

Optionally, the device control information includes operation code information and/or an operation event.

Optionally, the operation code information includes at least one operation code, and the at least one operation code indicates one or more of a button type, a button index, and a button operation type of a button of the second device. The button type includes, for example, a single button and a plurality of buttons. The button index indicates a specific button configured in the second device, for example, a button 1, a button 2, or a button 3. The button operation type includes, for example, tap, double-tap, and touch and hold.

For example, the first device sends, to the server, the device identifier of the second device and the device control information corresponding to the device identifier of the second device. In this way, the server can associate the received device identifier with the device control information. Subsequently, after receiving an operation code sent by the second device, the server can determine the device identifier of the second device that sends the operation code, and further determine the device control information corresponding to the device identifier, to trigger a corresponding operation event. For example, the second device determines, in response to a tap signal (for example, an operation code corresponding to the tap operation) sent by the second device, that a corresponding triggered operation event is turning on the light, and the second device may send an operation indication to the light, to trigger the light to be turned on.

For another example, the first device locally stores the device identifier of the second device and the device control information corresponding to the device identifier of the second device. In this way, the first device can directly associate the device identifier with the device control information. Subsequently, after receiving a control signal sent by the second device, the first device can determine the device identifier of the second device that sends the control signal, and further determine the device control information corresponding to the device identifier, to trigger a corresponding operation event.

For another example, scenario information of a plurality of scenarios is pre-configured in the server. In this case, the first device sends, to the server, the device identifier of the second device and the scenario identifier of the first scenario associated with the second device. In this way, after receiving the device identifier and the scenario identifier that are sent by the first device, the server can determine scenario information of the corresponding first scenario based on the scenario identifier, and further associate the device identifier with the corresponding first scenario, to subsequently trigger the corresponding scenario.

For another example, scenario information of a plurality of scenarios is pre-configured in the first device. In this case, the first device can directly determine scenario information of the corresponding first scenario based on the scenario identifier, and further associate the device identifier with the corresponding first scenario, to subsequently trigger the corresponding scenario.

In this way, a communication system may include a plurality of combinations and interaction manners between different devices, to meet a requirement for flexible combination of the communication system. In addition, in different combinations and interaction, a scenario configuration requirement of the second device can be implemented, to meet use of the user.

In some examples, the first device sends, to the second device, the device identifier of the second device and the device control information corresponding to the device identifier of the second device.

For example, after completing registration for the second device, the first device may determine the device identifier of the second device. In this case, after determining the device control information, the first device may send the device identifier and the device control information to the second device. Subsequently, after detecting a user operation, the second device may directly determine, based on the device control information, an operation code and/or an operation event corresponding to the user operation, and further send the operation code and/or the operation event to the server, to trigger control of a corresponding third device.

In this way, the device control information is directly configured for the second device, and in response to the user operation, the second device can trigger control of the third device.

In some embodiments, when the first device locally stores the device identifier of the second device and the device control information corresponding to the device identifier of the second device; or when the first device locally stores the device identifier of the second device and the scenario identifier of the first scenario associated with the second device, the first device receives a first operation code sent by the second device, and determines a first operation event corresponding to the first operation code. Then, the first device sends first operation indication information to at least one target third device, indicated by the first operation event, in at least one third device.

In some examples, the second device may further receive a second operation code sent by the second device, and determine a second operation event corresponding to the second operation code. Then, the first device sends second operation indication information to at least one target third device (which is the same as or different from the third device indicated by the first operation code), indicated by the second operation event, in the at least one third device.

In other words, one or more buttons may be configured for the second device, and one or more button operation types may be configured for a single button. In this way, in response to user operations, the second device may trigger sending of different operation codes to the first device, so that the second device flexibly controls a same third device or different third devices in different scenarios. This improves user experience.

In this way, the user can complete scenario configuration of the second device through a simple operation. Compared with the conventional technology in which the user needs to poke a reset hole on the second device with a pin to complete scenario configuration of the second device, in the configuration method provided in embodiments of this application, scenario configuration of the second device can be automatically completed through interaction between the first device and the second device. This effectively simplifies a user operation, reduces user operation difficulty, reduces user learning costs, and improves user experience.

In some embodiments, the first device determines, based on the obtained information of the second device, whether the second device is registered. When the second device is not registered, the first device registers with the server as a proxy for the second device based on the information of the second device; or when the second device is not registered, sends, to a fourth device, the information that is of the second device and that is used to complete registration for the second device. Optionally, the fourth device is a Bluetooth gateway. For example, the first device sends the obtained information of the second device to the fourth device, and the fourth device registers with the server as a proxy for the second device.

Optionally, the first device registers with the server as the proxy for the second device, and may obtain a device identifier sent by the server, where the device identifier indicates the second device. Then, the first device sends the device identifier to the second device.

Optionally, after determining that the registration for the second device is completed, the first device triggers a scenario configuration procedure of the second device.

In this way, in response to the obtained information of the second device, the first device can automatically trigger a registration procedure of the second device. This effectively reduces user operation difficulty.

In some embodiments, in response to approach or contact of the second device again, related information of the first scenario associated with the second device is displayed.

Optionally, the related information of the first scenario includes one or more of a device name of the second device, a scenario name of the first scenario, a trigger condition of the first scenario, a name of the first space, a scenario identifier of the first scenario, an icon of the second device, and a remaining battery level of the second device.

For example, in response to the NFC "tap to connect" operation of the user, the first device determines that a scenario is configured for the second device, and the scenario is a warm home scenario. In this case, the first device may display the interface 1601 shown in FIG. 16, and display, on the interface 1601, the details about the scenario configured for the second device. As shown by the reference numeral 161, the first device may display the name of the second device and the name of the configured scenario. As shown by the reference numeral 162, the first device may display the space to which the scenario configured for the second device is applied and the remaining battery level of the second device. As shown by the reference numeral 163, the first device may display the icon of the second device. As shown by the reference numeral 164, the first device may display the trigger condition of the scenario configured for the second device. As shown by the reference numeral 165, the first device may display the identifier and the name of the scenario configured for the second device.

In this way, in response to a simple operation, the user may read, by using the first device, the related information of the configured scenario of the second device, to determine whether the scenario of the second device needs to be reconfigured. This effectively simplifies user operation difficulty.

In some embodiments, when the second device includes a plurality of buttons, and the first scenario is a configured scenario of a target button in the plurality of buttons, in response to the approach or the contact of the second device again, the second device displays details about the scenario configured for the target button, and further displays details about a configured scenario of a button other than the target button in the plurality of buttons.

For example, in response to the NFC "tap to connect" operation of the user, the first device determines that the second device includes a plurality of buttons, and may determine a scenario configuration status of each button. In this case, the first device may display the interface 1801 shown in FIG. 18, and display, on the interface 1801, the details about the scenario configured for each button of the second device. For example, the first device includes the button 1 (for example, the target button), the button 2, and the button 3. The scenario configured for the button 1 is the warm home scenario and the safe home-leaving scenario, the scenario configured for the button 2 is the whole-house dehumidification scenario, and no scenario is configured for the button 3.

In some embodiments, in a process in which the first device associates the first scenario with the second device, a scenario writing animation effect is displayed, where the scenario writing animation effect includes an animation effect that is presented on the display interface of the first device and in which a scenario display component corresponding to the first scenario is sucked into a placement area of the second device on the display interface.

For example, on the interface 803 shown in FIG. 8(c), in the process in which the first device associates the first scenario with the second device, the scenario writing animation effect is displayed, where the scenario animation effect includes the animation effect in which the scenario card moves toward the icon display area in which the icon of the second device is located or is sucked into the icon display area in which the icon of the second device is located. The icon display area of the second device is, for example, the semicircular area shown on the interface 803.

In this way, the scenario writing animation effect is displayed, so that interest of the user in waiting for scenario writing is increased, and this helps the user learn of the scenario that is being written.

In some embodiments, the first device determines, based on the information of the second device, whether the second device includes a plurality of buttons. The first device displays a second interface, where the second interface is used to display prompt information, and the prompt information indicates the user to select a target button of a to-be-configured scenario from the plurality of buttons. Then, in response to a third operation performed by the user on the second interface, the first device determines the target button, and associates the first scenario with the target button in the second device.

For example, the first device detects an NFC "tap to connect" operation, obtains NFC tag information of the second device, and determines, based on device information in the NFC tag information, that the second device includes three buttons. In this case, the first device may display the interface 1001 shown in FIG. 10. On the interface 1001, after the first device determines the button selected by the user, the first device may display the scenario configuration interface, receive the operation of selecting the to-be-configured scenario by the user, and write, into the determined button of the second device, the to-be-configured scenario selected by the user.

In this way, when the second device includes the plurality of buttons, in response to user operations, the first device may also separately configure scenarios of different buttons, so that the user can control the third device in a plurality of scenarios by using one second device.

In some embodiments, the first device obtains first identity information of the user. Then, the first device associates the first scenario, the second device, and the first identity information based on the information of the second device.

For example, on the interface 803 shown in FIG. 8(c), in the process of writing the scenario into the second device, the first device may display the interface 2101 shown in FIG. 21, to prompt the user to perform fingerprint enrollment. In this process, the user may enroll a fingerprint by using the second device, and the second device may send a collected fingerprint to the first device. In this case, the first device may establish a correspondence between the obtained user fingerprint (namely, the first identity information), the second device, and the to-be-configured scenario. Therefore, in a subsequent process in which a user operates the second device, the second device may send a collected fingerprint to the first device, and the first device may determine, based on the second device and the user fingerprint, a triggered scenario.

In this way, different users may trigger different scenarios of the second device by using the same second device. This further improves user experience.

Optionally, the first device may further perform steps and functions performed by the smart control panel in the foregoing embodiments, the second device may further perform steps and functions performed by the smart switch in the foregoing embodiments, and the server may further perform steps and functions performed by the whole-house hub in the foregoing embodiments. In this way, the configuration method provided in the foregoing embodiment is implemented.

The configuration method provided in embodiments of this application is described above in detail with reference to FIG. 5(a) to FIG. 5(c) to FIG. 23. The following describes in detail the first device provided in embodiments of this application with reference to FIG. 24.

In a possible design, FIG. 24 is a diagram of a structure of a first device according to an embodiment of this application. As shown in FIG. 24, the first device 2400 may include a transceiver unit 2401 and a processing unit 2402. The first device 2400 may be configured to implement a function of the first device 100 (for example, the smart control panel) in the foregoing method embodiments.

Optionally, the transceiver unit 2401 is configured to support the first device 2400 in performing S2201 and S2204 to S2210 in FIG. 22; and/or is configured to support the first device 2400 in performing S2302 in FIG. 23.

Optionally, the processing unit 2402 is configured to support the first device 2400 in performing S2203 and S2211 in FIG. 22; and/or is configured to support the first device 2400 in performing S2301, S2302, and S2303 in FIG. 23.

The transceiver unit may include a receiving unit and a sending unit, may be implemented by a transceiver or a transceiver-related circuit component, and may be a transceiver or a transceiver module. Operations and/or functions of the units in the first device 2400 are separately used to implement corresponding procedures of the configuration method in the foregoing method embodiments. All related content of the steps in the foregoing method embodiments may be cited in function descriptions of corresponding functional units. For brevity, details are not described herein again.

Optionally, the first device 2400 shown in FIG. 24 may further include a storage unit (not shown in FIG. 24), and the storage unit stores a program or instructions. When the transceiver unit 2401 and the processing unit 2402 execute the program or the instructions, the first device 2400 shown in FIG. 24 is enabled to perform the configuration method in the foregoing method embodiments.

For technical effect of the first device 2400 shown in FIG. 24, refer to the technical effect of the configuration method in the foregoing method embodiments. Details are not described herein again.

In addition to a form of the first device 2400, the technical solutions provided in this application may also be a functional unit or a chip in the first device, or an apparatus that is matched with the first device for use.

An embodiment of this application further provides a chip system, including a processor. The processor is coupled to a memory, and the memory is configured to store a program or instructions. When the program or the instructions are executed by the processor, the chip system is enabled to implement the method in any one of the foregoing method embodiments.

Optionally, there may be one or more processors in the chip system. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the configuration method in the foregoing embodiments.

An embodiment of this application further provides a computer program product. When the computer program product runs on a computer, the computer is enabled to perform the foregoing related steps, to implement the configuration method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the configuration method in the foregoing method embodiments.

The apparatus, the computer-readable storage medium, the computer program product, or the chip provided in embodiments of this application is configured to perform the corresponding method provided above. Therefore, for beneficial effect that can be achieved, refer to the beneficial effect in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The descriptions of the foregoing implementations allow a person skilled in the art to clearly understand that, for the purpose of convenient and brief description, division into the foregoing functional modules is used as merely an example for description. In actual application, the foregoing functions can be allocated to different functional modules and implemented as required, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in an electronic form, a mechanical form, or another form.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A configuration method, applied to a first device, wherein the method comprises:
determining, based on obtained information of a second device, that the second device approaches or is in contact with the first device;
in response to approach or contact of the second device, obtaining a first scenario corresponding to a first operation performed by a user on a scenario configuration interface of the first device, wherein the first scenario is associated with behavior of controlling at least one third device; and
associating the first scenario with the second device.

2. The method according to claim 1, wherein after associating the first scenario with the second device, the method further comprises:
in response to approach or contact of the second device again, displaying related information of the first scenario associated with the second device.

3. The method according to claim 1 or 2, wherein associating the first scenario with the second device comprises:
locally storing or sending, to a server, a device identifier of the second device and device control information corresponding to the device identifier of the second device; or
locally storing or sending, to a server, a device identifier of the second device and a scenario identifier of the first scenario associated with the second device.

4. The method according to any one of claims 1 to 3, wherein associating the first scenario with the second device comprises:
sending, to the second device, the device identifier of the second device and the device control information corresponding to the device identifier of the second device.

5. The method according to claim 3, wherein the device control information comprises operation code information and/or an operation event.

6. The method according to claim 5, wherein the operation code information comprises at least one operation code, and the at least one operation code indicates one or more of a button type, a button index, and a button operation type of a button of the second device.

7. The method according to claim 6, wherein when the first device locally stores the device identifier of the second device and the device control information corresponding to the device identifier of the second device, or when the first device locally stores the device identifier of the second device and the scenario identifier of the first scenario associated with the second device, the method further comprises:
receiving a first operation code sent by the second device;
determining a first operation event corresponding to the first operation code; and
sending operation indication information to at least one target third device, indicated by the first operation event, in the at least one third device.

8. The method according to any one of claims 3 to 7, wherein before locally storing or sending, to the server, the device identifier of the second device, the method further comprises:
determining, based on the obtained information of the second device, whether the second device is registered; and
when the second device is not registered, registering with the server as a proxy for the second device based on the information of the second device; or
when the second device is not registered, sending, to a fourth device, the information that is of the second device and that is used to complete registration for the second device.

9. The method according to claim 8, wherein registering with the server as the proxy for the second device based on the information of the second device comprises:
obtaining a device identifier sent by the server, wherein the device identifier indicates the second device; and
sending the device identifier to the second device.

10. The method according to any one of claims 1 to 7, wherein obtaining the first scenario corresponding to the first operation performed by the user on the scenario configuration interface of the first device comprises:
displaying the scenario configuration interface, wherein the scenario configuration interface is used to display a scenario card; and
determining, in response to the first operation performed by the user on the scenario configuration interface, the first scenario that is selected by the user and that corresponds to a first scenario card.

11. The method according to claim 10, wherein before determining, in response to the first operation performed by the user on the scenario configuration interface, the first scenario that is selected by the user and that corresponds to the first scenario card, the method further comprises:
in response to a second operation performed by the user on the scenario configuration interface, editing the first scenario corresponding to the first scenario card.

12. The method according to claim 10 or 11, wherein associating the first scenario with the second device comprises:
displaying a scenario writing animation effect, wherein the scenario writing animation effect comprises an animation effect that is presented on a display interface of the first device and in which a scenario display component corresponding to the first scenario is sucked into a placement area of the second device on the display interface.

13. The method according to any one of claims 10 to 12, wherein displaying the scenario configuration interface comprises:
in response to an operation performed by the user on a scenario configuration component, displaying the scenario configuration interface; or
in response to the approach or the contact of the second device, displaying the scenario configuration interface.

14. The method according to any one of claims 1 to 13, wherein determining, based on the obtained information of the second device, that the second device approaches or is in contact with the first device comprises:
determining, based on the information that is of the second device and that is obtained through any one of near field communication NFC, Bluetooth, or wireless fidelity Wi-Fi, that the second device approaches or is in contact with the first device.

15. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 1 to 14.

16. A computer-readable storage medium, wherein the computer-readable storage medium comprises a computer program, and when the computer program is run on an electronic device, the electronic device is enabled to perform the method according to any one of claims 1 to 14.

17. A computer program product, wherein when the computer program product runs on a computer, the computer is enabled to perform the method according to any one of claims 1 to 14.
